# EUROPEAN PATENT SPECIFICATION

(11) **EP 4 210 883 B1**
(45) Date of publication and mention of the grant of the patent: **14.02.2024**
(21) Application number: 21766704.7
(22) Date of filing: 11.08.2021
(51) Int. Cl.: B22C 7/02, B22C 9/04, B33Y 70/00, B29C 64/124, B33Y 80/00, B33Y 10/00

(54) **INVESTMENT CASTING COMPOSITIONS AND METHODS**
FEINGUSSZUSAMMENSETZUNGEN UND VERFAHREN
COMPOSITIONS ET PROCÉDÉS DE MOULAGE DE PRÉCISION À MODÈLES PERDUS

(30) Priority: 11.09.2020 US 202063077020 P
(43) Date of publication of application: 19.07.2023
(73) Proprietor: 3M Innovative Properties Company, Saint Paul, Minnesota 55133-3427 (US)
(72) Inventor: MAHONEY, Wayne S., Saint Paul, Minnesota 55133-3427 (US); LAMPE, Matthew J., Saint Paul, Minnesota 55133-3427 (US); BIERNATH, Rolf W., Saint Paul, Minnesota 55133-3427 (US); VANG, Kalc Chur, Saint Paul, Minnesota 55133-3427 (US); KROPP, Michael A., Saint Paul, Minnesota 55133-3427 (US); BRUZEK, Matthew J., Saint Paul, Minnesota 55133-3427 (US)
(74) Representative: Bergen, Katja
(86) International application number: PCT/IB2021/057417
(87) International publication number: WO 2022/053890

(56) References cited:
- WO-A1-2020/015905
- US-A- 4 946 884
- TODD J SPENCER ET AL: "Decomposition of poly(propylene carbonate) with UV sensitive iodonium salts", POLYMER DEGRADATION AND STABILITY, BARKING, GB, vol. 96, no. 4, 8 December 2010 (2010-12-08), pages 686-702, XP028365415, ISSN: 0141-3910, DOI: 10.1016/J.POLYMDEGRADSTAB.2010.12.003 [retrieved on 2010-12-24]

## Description

### Field

The present disclosure relates to investment casting, investment casting compositions, and methods of using investment casting compositions.

### Background

Investment casting is a manufacturing process to make metal parts in which an investment casting pattern (typically wax) is coated with a refractory ceramic material. Once the ceramic material is hardened its internal geometry takes the shape of the pattern. The (e.g., wax) pattern is removed by heat, and molten metal is poured into the cavity where the pattern had been, to create an exact duplicate of the pattern. Parts manufactured in industry by this process include dental fixtures, gears, cams, ratchets, jewelry, turbine blades, machinery components and other parts of complex geometry.

In the investment casting process, the pattern is surrounded (e.g., invested) with the refractory material through a process of sequential dipping/drying in ceramic slurries that contain extremely fine-grained silica, water and binders. The first such layer applied to the pattern is referred to as the facecoat; this typically contains extremely fine silica to make a smooth surface, because it contacts the metal during the casting process. Subsequent layers usually include the addition of stucco, which is the application of dry refractory grains or sand to help build volume and porosity.

Once the shell is complete, it is necessary to remove the (e.g., wax) pattern invested within. This is generally accomplished by either placing the shell into a steam autoclave or directly into a preheated furnace. To minimize shell cracks from expansion of the pattern material, it is preferable to reach a melting temperature of the pattern material within a few seconds. As the pattern material (e.g., wax) melts, it exits the shell through a runner or sprue system of the assembly, then complete removal can be ensured through firing in a high-temperature furnace under oxygen-rich environments to remove any remaining residues. Removal of as much pattern material as possible in the melt-out step is desirable to minimize the organic content that is released during the high-temperature furnace process step.

Finally, molten metal is poured into the voids inside the ceramic mold and allowed to solidify. The mold is then removed (e.g., mechanically and chemically) from about the article to reveal the metal object(s). WO 2020/015905 A1 and US 4 946 884 A describe examples of sacrificial investment casting compositions.

### Summary

Compositions, investment casting compositions and methods of using investment casting compositions are provided.

In a first aspect, an investment casting composition is provided. The investment casting composition includes: a) at least one ethylenically unsaturated monomer; b) hydroxyl-functional poly(alkylene carbonate) polymer; c) a free-radical initiator; and d) a catalyst that aids in thermal decomposition of the hydroxyl-functional poly(alkylene carbonate) polymer.

In a second aspect, a method is provided. The method includes: a) forming at least one investment casting pattern from an investment casting composition; b) investing the at least one investment casting pattern with at least one ceramic slurry to form a mold shell; and c) heating the mold shell to initiate decomposition of the hydroxyl-functional poly(alkylene carbonate) polymer and to form a ceramic mold. The investment casting composition includes: 1) at least one ethylenically unsaturated monomer; 2) a hydroxyl-functional poly(alkylene carbonate) polymer; 3) a free-radical initiator; and 4) a catalyst that aids in thermal decomposition of the hydroxyl-functional poly(alkylene carbonate) polymer.

The above summary of the present disclosure is not intended to describe each disclosed embodiment or every implementation of the present invention. The description that follows more particularly exemplifies illustrative embodiments. In several places throughout the application, guidance is provided through lists of examples, which examples may be used in various combinations. In each instance, the recited list serves only as a representative group and should not be interpreted as an exclusive list. The present invention is defined in the appended claims.

### Brief Description of the Drawings

FIG. 1 is a flow chart of an exemplary method.
FIG. 2A is schematic perspective view of an investment casting pattern, preparable according to the present disclosure.
FIG. 2B is another schematic perspective view of the investment casting pattern of FIG. 2A.
FIG. 2C is a further schematic perspective view of the investment casting pattern of FIG. 2A.
FIG. 3 is a schematic perspective view of a support structure for use with a plurality of investment casting patterns.
FIG. 4 is a photograph of a mold shell, prepared according to the present disclosure.
FIG. 5A is a graph of typical autoclave conditions for use according to the present disclosure.
FIG. 5B is a graph of the first 30 seconds of the autoclave conditions of FIG. 5A.

### Detailed Description

When investment casting pattern prototypes are needed, or time is short, patterns can also be made using additive manufacturing technologies, allowing for rapid prototype castings to be completed much faster. One disadvantage with investment casting patterns that have been made using additive manufacturing is their high thermal expansion, which tends to result in cracking of the investment. Additionally, additive manufactured materials generally contain some degree of crosslinking when prepared from vat polymerization processes such as stereolithography (SLA) and digital light processing (DLP). Hence, the patterns do not flow from the investment like wax materials, resulting in significant material that must be burned out during a high-temperature furnace step.

It has been discovered that certain investment casting compositions are useful for the preparation of additive manufactured patterns used in the investment casting process, advantageously exhibiting significant reduction in investment cracking, and thermally decomposing to reduce the quantity of material needed to be burned out in a high-temperature furnace.

### Glossary

As used herein, "actinic radiation" encompasses UV radiation, e-beam radiation, visible radiation, infrared radiation, and any combination thereof.

As used herein, a "monomer" is a single, one unit molecule capable of combination with itself or other monomers to form oligomers or polymers; an "oligomer" is a component having 2 to 9 repeat units; and a "polymer" is a component having 10 or more repeat units.

As used herein, "aliphatic group" means a saturated or unsaturated linear, branched, or cyclic hydrocarbon group. This term is used to encompass alkyl, alkenyl, and alkynyl groups, for example.

As used herein, "alkyl" means a linear or branched, cyclic or acyclic, saturated monovalent hydrocarbon having from one to thirty-two carbon atoms, e.g., methyl, ethyl, 1-propyl, 2-propyl, pentyl, and the like.

As used herein, "alkylene" means a linear saturated divalent hydrocarbon having from one to twelve carbon atoms or a branched saturated divalent hydrocarbon radical having from two to twelve carbon atoms, e.g., methylene, ethylene, propylene, 2-methylpropylene, pentylene, hexylene, and the like.

As used herein, "alkenyl" refers to a monovalent linear or branched unsaturated aliphatic group with one or more carbon-carbon double bonds, e.g., vinyl. Unless otherwise indicated, the alkenyl groups typically contain from two to twenty carbon atoms.

As used herein, "alkenediyl" refers to a straight-chained, branched, or cyclic divalent unsaturated aliphatic group, e.g., -CH=CH-, -CH=C(CH₃)CH₂-, -CH=CHCH₂-, and the like. Unless otherwise indicated, the alkenediyl groups typically contain from two to twenty carbon atoms.

As used herein, the term "aryl" refers to a monovalent group that is a radical of an aromatic carbocyclic compound. The aryl group has at least one aromatic carbocyclic ring and can have 1 to 5 optional rings that are connected to or fused to the aromatic carbocyclic ring. The additional rings can be aromatic, aliphatic, or a combination thereof. The aryl group usually has 5 to 20 carbon atoms.

As used herein, the term "substituted aryl" refers to an aryl group substituted with at least one alkyl group, substituted with at least one alkoxy group, or substituted with at least one alkyl group plus at least one alkoxy group. The substituted aryl group contains 6 to 40 carbon atoms. The substituted aryl group often contains an aryl group having 5 to 20 carbon atoms and an alkyl group and/or alkoxy group each having 1 to 20 carbon atoms.

As used herein, the term "aralkyl" refers to an alkyl group substituted with at least one aryl group. The aralkyl group contains 6 to 40 carbon atoms. The aralkyl group often contains an alkyl group having 1 to 20 carbon atoms and an aryl group having 5 to 20 carbon atoms.

As used herein, the term "ethylenically unsaturated" refers to a double bond between two carbon atoms, and includes functional groups such as vinyl (H₂C=CH-), including vinyl ethers (H₂C=CHO-), vinyl esters (H₂C=CHOCO-), styrene (e.g., vinylbenzene) and alkenyl (H₂C=CH(CH₂)ₙ- wherein n typically ranges from 1 to 30 or 1 to 20 or 1 to 10. Ethylenically unsaturated groups also include (meth)acryl such as (meth)acrylamide (H₂C=CHCONH- and H₂C=CH(CH₃)CONH-) and (meth)acrylate(CH₂=CHCOO- and CH₂=C(CH₃)COO-).

As used herein, the term "(meth)acrylate" is a shorthand reference to acrylate, methacrylate, or combinations thereof, "(meth)acrylic" is a shorthand reference to acrylic, methacrylic, or combinations thereof, and "(meth)acryl" is a shorthand reference to acryl and methacryl groups. "Acryl" refers to derivatives of acrylic acid, such as acrylates, methacrylates, acrylamides, and methacrylamides. By "(meth)acryl" is meant a monomer or oligomer having at least one acryl or methacryl group, and linked by an aliphatic segment if containing two or more groups. As used herein, "(meth)acrylate-functional compounds" are compounds that include, among other things, a (meth)acrylate moiety. The term "(meth)acryloyl" refers to a group of formula CH₂=CHR^{b}-(CO)- where R^{b} is hydrogen or methyl and the group -(CO)- refers to a carbonyl group.

As used herein, "slurry" refers to a fluid mixture of a solid grain with a liquid.

As used herein, "stucco" refers to a solid grain having a particle size usually not coarser than a U.S. sieve 20 mesh screen.

As used herein, "wax" refers to a lipophilic substance capable of melting at low temperatures to yield a low viscosity liquid.

Also herein, all numbers are assumed to be modified by the term "about" and preferably by the term "exactly." As used herein in connection with a measured quantity, the term "about" refers to that variation in the measured quantity as would be expected by the skilled artisan making the measurement and exercising a level of care commensurate with the objective of the measurement and the precision of the measuring equipment used. Also herein, the recitations of numerical ranges by endpoints include all numbers subsumed within that range as well as the endpoints (e.g., 1 to 5 includes 1, 1.5, 2, 2.75, 3, 3.80, 4, 5, etc.).

As used herein as a modifier to a property or attribute, the term "generally", unless otherwise specifically defined, means that the property or attribute would be readily recognizable by a person of ordinary skill but without requiring absolute precision or a perfect match (e.g., within +/- 20 % for quantifiable properties). The term "substantially", unless otherwise specifically defined, means to a high degree of approximation (e.g., within +/- 10% for quantifiable properties) but again without requiring absolute precision or a perfect match. Terms such as same, equal, uniform, constant, strictly, and the like, are understood to be within the usual tolerances or measuring error applicable to the particular circumstance rather than requiring absolute precision or a perfect match.

### Investment Casting Compositions

In a first aspect, an investment casting composition is provided. The investment casting composition comprises:
a) at least one ethylenically unsaturated monomer;
b) a hydroxyl-functional poly(alkylene carbonate) polymer;
c) a free-radical initiator; and
d) a catalyst that aids in thermal decomposition of the hydroxyl-functional poly(alkylene carbonate) polymer.

The components of the investment casting composition are described in detail below.

### Ethylenically Unsaturated Monomers

By definition, a monomer that is ethylenically unsaturated is a component that contains at least one free radically reactive group. In the investment casting compositions, the reactive group can co-react with another ethylenically unsaturated monomer (e.g., is capable of undergoing addition polymerization). In some embodiments, at least one ethylenically unsaturated monomer comprises a monofunctional monomer. In some embodiments, at least one ethylenically unsaturated monomer comprises a multifunctional monomer. Often, at least one ethylenically unsaturated monomer comprises a (meth)acryl group, a styrenic group, or a vinyl ether group, in some instance preferably a (meth)acryl group. In some embodiments, the ethylenically unsaturated monomer present is not an acrylate. Some such suitable monomers include for instance and without limitation, acrylamides, acrylonitriles, (meth)acrylonitriles, vinyl esters, vinyl ethers, n-vinyl pyrrolidinone, n-vinyl caprolactam, vinyl aromatics, styrenics, malonates, or any combination thereof.

Some suitable monofunctional monomers include monofunctional (meth)acrylate monomers useful in embodiments of the present disclosure including 2-phenoxyethyl (meth)acrylate, cyclohexyl (meth)acrylate, benzyl (meth)acrylate, isobornyl (meth)acrylate, acid-functional monomers such as (meth)acrylic acid, alkoxylated lauryl (meth)acrylate, alkoxylated phenol (meth)acrylate, alkoxylated tetrahydrofurfuryl (meth)acrylate, caprolactone (meth)acrylate, cyclic trimethylolpropane formyl (meth)acrylate, ethylene glycol methyl ether methacrylate, ethoxylated nonyl phenol (meth)acrylate, isodecyl (meth)acrylate, isooctyl (meth)acrylate, lauryl (meth)acrylate, octadecyl (meth)acrylate (stearyl (meth)acrylate), tetrahydrofurfuryl (meth)acrylate, tridecyl (meth)acrylate, allyl (meth)acrylate, methyl (meth)acrylate, ethyl (meth)acrylate, n-propyl (meth)acrylate, n-butyl (meth)acrylate, isobutyl (meth)acrylate, n-hexyl (meth)acrylate, 2-ethylhexyl (meth)acrylate, n-octyl (meth)acrylate, n-decyl (meth)acrylate, n-dodecyl (meth)acrylate, 2-hydroxyethyl (meth)acrylate, 2- and 3-hydroxypropyl (meth)acrylate, 2-methoxyethyl(meth)acrylate, 2-ethoxyethyl (meth)acrylate, 2- or 3-ethoxypropyl (meth)acrylate, 2-(2-ethoxyethoxy)ethyl acrylate, glycidyl (meth)acrylate, phosphonate-functional (meth)acrylate monomers (for example, the SIPOMER PAM resins from Solvay Specialty Polymers USA, LLC or those from Miwon North America (Exton, PA) under the trade designation MIRAMER SC1400 and MIRAMER SC1400A), N-(2-(2-oxo-1-imidazolidinyl)ethyl)-methacrylamide (methacrylamidoethyl ethyleneurea ("MAEEU") available from Solvay Specialty Polymers USA, LLC. under the trade designation SIPOMER WAM II), and the like, and combinations thereof.

Specific examples of monofunctional (meth)acrylate monomers useful in embodiments of the present disclosure include trimethyl cyclohexyl acrylate (commercially available from Miwon North America (Exton, PA) under the trade designation MIRAMER M1130), cyclic trimethylolpropane formal acrylate (commercially available from Miwon North America (Exton, PA) under the trade designation MIRAMER M1110 and from SARTOMER (Exton, PA) under the trade designation SR531)), caprolactone acrylate (commercially available from Miwon North America (Exton, PA) under the trade designation MIRAMER M100), benzyl acrylate (commercially available from Miwon North America (Exton, PA) under the trade designation MIRAMER M1182), phenoxyethyl acrylate (commercially available from Miwon North America (Exton, PA) under the trade designation MIRAMER M140), tetrahydrofurfuryl acrylate (commercially available from Miwon North America (Exton, PA) under the trade designation MIRAMER M150), tert-butyl acrylate (commercially available from BASF (Florham Park, NJ) under the trade designation TBA), tert-butyl cyclohexyl acrylate (commercially available from SARTOMER (Exton, PA) under the trade designation SR217), tert-butyl cyclohexyl methacrylate (commercially available from SARTOMER (Exton, PA) under the trade designation SR218), isobornyl acrylate (commercially available from SARTOMER (Exton, PA) under the trade designation SR506, or from Evonik Performance Materials GmbH under the trade designation VISIOMER IBOA), phenoxyethyl methacrylate (commercially available from SARTOMER (Exton, PA) under the trade designation SR340), dicyclopentanyl acrylate (commercially available from Hitachi Chemical (Tokyo, Japan) under the trade designation FANCRYL FA513AS), dicyclopentenyloxyethyl methacrylate (commercially available from Hitachi Chemical (Tokyo, Japan) under the trade designation FANCRYL FA-512M or FA-512MT).

Suitable free-radically polymerizable multifunctional monomers include di-, tri-, or other poly-acrylates and methacrylates such as glycerol diacrylate, ethoxylated bisphenol A dimethacrylate (D-zethacrylate), tetraethylene glycol dimethacrylate (TEGDMA), polyethyleneglycol dimethacrylate (PEGDMA), glycerol triacrylate, ethyleneglycol diacrylate, diethyleneglycol diacrylate, triethyleneglycol dimethacrylate, 1,3-propanediol diacrylate, 1,3-propanediol dimethacrylate, tricyclodecane dimethanol diacrylate, tricyclodecane dimethanol dimethacrylate, trimethylolpropane triacrylate, 1,2,4-butanetriol trimethacrylate, 1,4-cyclohexanediol diacrylate, pentaerythritol triacrylate, pentaerythritol tetraacrylate, pentaerythritol tetramethacrylate, dipentaerythritol pentaacrylate, dipentaerythritol pentamethacrylate, dipentaerythritol hexaacrylate, dipentaerythritol hexamethacrylate, sorbitol hexacrylate, bis[l-(2-acryloxy)]-p-ethoxyphenyldimethylmethane, bis [1-(3-acryloxy-2-hydroxy)]-p-propoxyphenyldimethylmethane, and tris-hydroxyethyl-isocyanurate trimethacrylate; bis-acrylates of polyesters (e.g., methacrylate-terminated polyesters); the bis-acrylates and bis-methacrylates of polyethylene glycols of molecular weight 200-500, copolymerizable mixtures of acrylated monomers such as those in US 4,652,274 (Boettcher et al.); polyfunctional (meth)acrylates comprising urea or amide groups, such as those of EP2008636 (Hecht et al.). The ethylenically unsaturated monomer can comprise one or more poly(meth)acrylates, for example, di-, tri-, tetra- or pentafunctional monomeric aliphatic, cycloaliphatic or aromatic acrylates or methacrylates.

Examples of suitable aliphatic poly(meth)acrylates having more than two (meth)acrylate groups in their molecules are the triacrylates and trimethacrylates of: hexane-2,4,6-triol; glycerol or 1,1,1-trimethylolpropane; ethoxylated or propoxylated glycerol or 1,1,1-trimethylolpropane; and the hydroxyl-containing tri(meth)acrylates that are obtained by reacting triepoxide compounds, for example the triglycidyl ethers of said triols, with (meth)acrylic acid. It is also possible to use, for example, pentaerythritol tetraacrylate, bistrimethylolpropane tetraacrylate, pentaerythritol monohydroxytriacrylate or -methacrylate, or dipentaerythritol monohydroxypentaacrylate or - methacrylate.

Another suitable class of free radical polymerizable compounds includes aromatic di(meth)acrylate compounds and trifunctional or higher functionality (meth)acrylate compounds. Trifunctional or higher functionality meth(acrylates) can be tri-, tetra- or pentafunctional monomeric or oligomeric aliphatic, cycloaliphatic or aromatic acrylates or methacrylates.

Examples of suitable aliphatic tri-, tetra- and pentafunctional (meth)acrylates are the triacrylates and trimethacrylates of: hexane-2,4,6-triol; glycerol or 1,1,1-trimethylolpropane; ethoxylated or propoxylated glycerol or 1,1,1-tri-methylolpropane; and the hydroxyl-containing tri(meth)acrylates that are obtained by reacting triepoxide compounds, for example the triglycidyl ethers of said triols, with (meth)acrylic acid. It is also possible to use, for example, pentaerythritol tetraacrylate, bistrimethylolpropane tetraacrylate, pentaerythritol monohydroxytriacrylate or - methacrylate, or dipentaerythritol monohydroxypentaacrylate or -methacrylate. In some embodiments, tri(meth)acrylates comprise 1,1-trimethylolpropane triacrylate or methacrylate, ethoxylated or propoxylated 1,1,1-trimethylolpropanetriacrylate or methacrylate, ethoxylated or propoxylated glycerol triacrylate, pentaerythritol monohydroxy triacrylate or methacrylate, or tris(2-hydroxy ethyl) isocyanurate triacrylate. Further examples of suitable aromatic tri(meth)acrylates are the reaction products of triglycidyl ethers of trihydroxy benzene and phenol or cresol novolacs containing three hydroxyl groups, with (meth)acrylic acid.

In some cases, an ethylenically unsaturated monomer comprises diacrylate and/or dimethacrylate esters of aliphatic, cycloaliphatic or aromatic diols, including 1,3- or 1,4-butanediol, neopentyl glycol, 1,6-hexanediol, 1,9-nonanediol, dodecane diol, diethylene glycol, triethylene glycol, tetraethylene glycol, polyethylene glycol, tripropylene glycol, ethoxylated or propoxylated neopentyl glycol, 1,4-dihydroxymethylcyclohexane, 2,2-bis(4-hydroxycyclohexyl)propane or bis(4-hydroxycyclohexyl)methane, hydroquinone, 4,4'-dihydroxybiphenyl, bisphenol A, bisphenol F, bisphenol S, ethoxylated or propoxylated bisphenol A, ethoxylated or propoxylated bisphenol F or ethoxylated or propoxylated bisphenol S. In some cases, an ethylenically unsaturated monomer comprises one or more higher functional acrylates or methacrylates such as dipentaerythritol monohydroxy pentaacrylate or bis(trimethylolpropane)tetraacrylate.

Collectively, one or more ethylenically unsaturated monomers may be present in the composition in an amount of 20 wt.% or greater, based on the total weight of the investment casting composition, 25 wt.% or greater, 30 wt.% or greater, 35 wt.% or greater, 40 wt.% or greater, 45 wt.% or greater, or 50 wt.% or greater; and 80 wt.% or less, 75 wt.% or less, 70 wt.% or less, 65 wt.% or less, 60 wt.% or less, or 55 wt.% or less, based on the total weight of the investment casting composition.

### Hydroxyl-Functional Poly(Alkylene Carbonate) Polymer

Poly(alkylene carbonate) polymers are formed by reacting carbon dioxide with one or more epoxides in the presence of a catalyst. Suitable hydroxyl-functional poly(alkylene carbonate) polymers are as described in detail in U.S. Patent No. 8,247,520 (Allen et al.). Exemplary commercially available hydroxyl-functional poly(alkylene carbonate) polymers include those under the trade designations CONVERGE 212-10 and CONVERGE 212-20, both available from Aramco Performance Materials, LLC (Houston, TX).

Typically, the polymer has more than one hydroxyl (i.e., -OH) functionalization and is thus a polyol. In many embodiments, the polymer is a diol, with hydroxyl functionalization at each end of the polymer, preferably with 90% or greater of the end groups being hydroxyl groups. Such polymers may be referred to as polypropylene carbonate) diol polymers. Preferably, the polymer chains of the hydroxyl-functional poly(alkylene carbonate) polymers have a high carbonate content, with 92% or greater, 95% or greater, 98% or greater, or 99% or greater of the polymer linkages being carbonate linkages. The carbonate linkages can be determined using ¹H or ¹³C nuclear magnetic resonance (NMR) spectroscopy. In some embodiments, the hydroxyl-functional poly(alkylene carbonate) polymer exhibits a narrow polydispersity index, such as less than 2, 1.5 or less, 1.4 or less, 1.3 or less, 1.2 or less, or even 1.1 or less.

The hydroxyl-functional poly(alkylene carbonate) polymer typically has a number average molecular weight of up to 50,000 grams per mole (g/mol), such as 700 g/mol or greater, 800 g/mol or greater, 900 g/mol or greater, 1,000 g/mol or greater, 1,250 g/mol or greater, 1,500 g/mol or greater, 1,750 g/mol or greater, 2,000 g/mol or greater, 2,500 g/mol or greater, 3,000 g/mol or greater, 4,000 g/mol or greater, 5,000 g/mol or greater, 6,000 g/mol or greater, 7,000 g/mol or greater, 8,000 g/mol or greater, 9,000 g/mol or greater, 10,000 g/mol or greater, 12,000 g/mol or greater, 15,000 g/mol or greater; and a number average molecular weight of 50,000 g/mol or less, 47,000 g/mol or less, 45,000 g/mol or less, 42,000 g/mol or less, 40,000 g/mol or less, 37,000 g/mol or less, 35,000 g/mol or less, 32,000 g/mol or less, 30,000 g/mol or less, 27,000 g/mol or less, 25,000 g/mol or less, 22,000 g/mol or less, 20,000 g/mol or less, or 17,000 g/mol or less. Stated another way, the hydroxyl-functional poly(alkylene carbonate) polymer may have a number average molecular weight of 700 g/mol to 50,000 g/mol, 700 g/mol to 2,000 g/mol, 1,000 g/mol, or 2,000 g/mol. The number average molecular weight of the hydroxyl-functional poly(alkylene carbonate) polymer is typically determined using gel permeation chromatography with polystyrene standards. It is to be understood that reported number average molecular weight amounts are often rounded by manufacturers; for instance, a commercially available poly(propylene carbonate) diol polymer (i.e., CONVERGE 212-10 mentioned above) reported to have a hydroxyl number of 106 milligrams of potassium hydroxide per gram of polymer and a number average molecular weight of 1,000 g/mol can be calculated to actually have a number average molecular weight of about 1,058 g/mol. Accordingly, the number average molecular weight numbers include variability of plus or minus eight percent of the stated number average molecular weight.

The hydroxyl-functional poly(alkylene carbonate) polymer is typically present in an investment casting composition in an amount of 20 wt.% or greater, based on the total weight of the investment casting composition, 25 wt.% or greater, 30 wt.% or greater, 35 wt.% or greater, 40 wt.% or greater, 45 wt.% or greater, or 50 wt.% or greater; and to 80 wt.%, or less, 75 wt.% or less, 70 wt.% or less, 65 wt.% or less, 60 wt.% or less, or 55 wt.% or less, based on the total weight of the investment casting composition. Stated another way, the hydroxyl-functional poly(alkylene carbonate) polymer may be present in an amount of 20 wt.% to 80 wt.%, based on the total weight of the investment casting composition. It is noted that because the total weight of the investment casting composition is 100 wt.%, in instances where ranges are provided of more than one component whose upper range limits together add up to greater than 100 wt.% (e.g., the ethylenically unsaturated monomer plus the hydroxyl-functional poly(alkylene carbonate) polymer), clearly at least one of the components is present in an actual composition in a lower amount, such that all the components present add up to 100 wt.%.

### Free-Radical Initiator

In some embodiments, the free-radical initiator comprises a thermal (i.e., thermally-activated) initiator. In some embodiments, a thermal initiator is present in an investment casting composition in an amount of up to about 5% by weight, based on the total weight of the investment casting composition. In some cases, a thermal initiator is present in an amount of 0.1 wt.% or greater, based on the total weight of the investment casting composition, 0.25 wt.% or greater, 0.5 wt.% or greater, 0.75 wt.% or greater, 1 wt.% or greater, 1.25 wt.% or greater, 1.5 wt.% or greater, 1.75 wt.% or greater, 2 wt.% or greater, or 2.25 wt.% or greater; and 5 wt.% or less, 4.5 wt.% or less, 4 wt.% or less, 3.5 wt.% or less, 3 wt.% or less, or 2.5 wt.% or less, based on the total weight of the investment casting composition. In some embodiments, a thermal initiator is present in an amount of 0.5 to 5 wt.%, based on the total weight of the investment casting composition. Suitable thermal initiators include for instance and without limitation, peroxides such as benzoyl peroxide, dibenzoyl peroxide, dilauryl peroxide, cyclohexane peroxide, methyl ethyl ketone peroxide, hydroperoxides, e.g., tert-butyl hydroperoxide and cumene hydroperoxide, dicyclohexyl peroxydicarbonate, and t-butyl perbenzoate, and diazo compounds such as 2,2,-azo-bis(isobutyronitrile). Examples of commercially available thermal initiators include: initiators available from Chemours Co. (Wilmington, DE) under the VAZO trade designation including VAZO 67 (2,2'-azo-bis(2-methybutyronitrile)), VAZO 64 (2,2'-azo-bis(isobutyronitrile)), and VAZO 52 (2,2'-azo-bis(2,2-dimethyvaleronitrile)), and LUPEROX A98 from Arkema (King of Prussia, Pennsylvania))).

In some embodiments, the free-radical initiator comprises a photoinitiator. Photoinitiators are generally used with ultraviolet (UV) light, although other light sources could be used with the appropriate choice of initiator, such as visible light initiators, infrared light initiators, and the like. Typically, UV photoinitiators are used.

A photoinitiator may be present in an investment casting composition in an amount of 0.01 wt.% or greater, based on the total weight of the investment casting composition, 0.1 wt.% or greater, 0.5 wt.% or greater, 1 wt.% or greater, 2 wt.% or greater, or 3 wt.% or greater; and 10 wt.% or less, 8 wt.% or less, 6 wt.% or less, or 4 wt.% or less, based on the total weight of the investment casting composition, such as in an amount of up to about 5% by weight, based on the total weight of the investment casting composition. In some cases, a photoinitiator is present in an amount of about 0.1-5 wt.%, based on the total weight of the investment casting composition. Such a free-radical initiator typically comprises photoinitiator groups selected from acyl phosphine oxide, alkyl amine acetophenone, benzil ketal, hydroxy-acetophenone, organic or inorganic peroxide, a persulfate, titanocene complex, or azo. When the initiator groups include a persulfate, tetramethylethylenediamine may also be included as a curing accelerator.

Useful photoinitiators include those known as useful for photocuring free-radically polyfunctional (meth)acrylates. Exemplary photoinitiators include benzoin and its derivatives such as alpha-methylbenzoin; alpha-phenylbenzoin; alpha-allylbenzoin; alpha benzylbenzoin; benzoin ethers such as benzil dimethyl ketal (e.g., "OMNIRAD BDK" from IGM Resins USA Inc., St. Charles, IL), benzoin methyl ether, benzoin ethyl ether, benzoin n-butyl ether; acetophenone and its derivatives such as 2-hydroxy-2-methyl-1-phenyl-1-propanone (e.g., available under the trade designation OMNIRAD 1173 from IGM Resins USA Inc., St. Charles, IL) and 1-hydroxycyclohexyl phenyl ketone (e.g., available under the trade designation OMNIRAD 184 from IGM Resins USA Inc., St. Charles, IL); 2-methyl-1-[4-(methylthio)phenyl]-2-(4-morpholinyl)-1-propanone (e.g., available under the trade designation OMNIRAD 907 from IGM Resins USA Inc., St. Charles, IL); 2-benzyl-2-(dimethylamino)-1-[4-(4-morpholinyl)phenyl]-1-butanone (e.g., available under the trade designation OMNIRAD 369 from IGM Resins USA Inc., St. Charles, IL); polyethylene glycol di(beta-4-[4-(2-dimethylamino-2-benzyl)butanoylphenyl]piperazine)propionate (available under the trade designation OMNIPOL 910 from IGM Resins USA Inc., St. Charles, IL); and phosphine oxide derivatives such as ethyl-2,4,6-trimethylbenzoylphenyl phosphinate (e.g. available under the trade designation TPO-L from IGM Resins USA Inc., St. Charles, IL), and bis-(2,4,6-trimethylbenzoyl)phenylphosphine oxide (e.g., available under the trade designation OMNIRAD 819 from IGM Resins USA Inc., St. Charles, IL).

Other useful photoinitiators include, for example, pivaloin ethyl ether, anisoin ethyl ether, anthraquinones (e.g., anthraquinone, 2-ethylanthraquinone, 1-chloroanthraquinone, 1,4-dimethylanthraquinone, 1-methoxyanthraquinone, or benzanthraquinone), halomethyltriazines, benzophenone and its derivatives, iodonium salts, titanium complexes such as bis(eta5-2,4-cyclopentadien-1-yl)-bis[2,6-difluoro-3-(1H-pyrrol-1-yl)-phenyl]titanium (e.g., available under the trade designation CGI 784DC from BASF, Florham Park, NJ); halomethyl-nitrobenzenes (e.g., 4-bromomethylnitrobenzene), and combinations of photoinitiators where one component is a mono- or bis-acylphosphine oxide (e.g., available under the trade designations IRGACURE 1700, IRGACURE 1800, and IRGACURE 1850 from BASF, Florham Park, NJ, and under the trade designation OMNIRAD 4265 from IGM Resins USA Inc., St. Charles, IL).

### Catalyst

It has been discovered that the inclusion of a catalyst that assists in thermally decomposing the hydroxyl-functional poly(alkylene carbonate) polymer in an investment casting pattern contributes to minimizing cracking of the investment mold shell upon heating to form a ceramic mold. This is believed to be due to the softening, instead of expanding, of the investment pattern material upon heating. Moreover, the quantity of investment pattern material that remains in the ceramic mold is less than the same investment casting pattern absent the catalyst, which is advantageous when subsequently burning out the remaining investment pattern material. Aiding in thermally decomposing the hydroxyl-functional poly(alkylene carbonate) polymer means that the catalyst may function to decrease the decomposition temperature and/or to decrease the amount of time required for decomposition of the hydroxyl-functional poly(alkylene carbonate) polymer.

In some embodiments, the thermal decomposition catalyst comprises at least one of a photoacid generator, a thermal acid generator, or an acid. In some embodiments, the thermal decomposition catalyst comprises at least one of a photobase generator, a thermal base generator, or a base. A photoacid generator photolyzes upon exposure to actinic radiation yielding an acid and a residue compound; a photobase generator photolyzes upon exposure to actinic radiation yielding a base and a residue compound; a thermal acid generator fragments upon exposure to heat yielding an acid and a residue compound; and a thermal base generator fragments upon exposure to heat yielding a base and a residue compound. The generated acid or base then catalyzes the decomposition of the hydroxyl-functional poly(alkylene carbonate) polymer.

Ionic photoacid generators are known, and reference may be made to K. Dietliker, Chemistry and Technology of UV and EB Formulation for Coatings, Inks and Paints, vol. III, SITA Technology Ltd., London, 1991. Further reference may be made to Crivello J.V. (1984) Cationic polymerization - Iodonium and sulfonium salt photoinitiators, in Initiators - Poly-Reactions - Optical Activity, Advances in Polymer Science, vol 62, Springer, Berlin, Heidelberg.

Optionally, the catalyst comprises a photoacid generator comprising an onium salt. Common photoacid generators are onium salts such as triarylsulfonium salts, diazonium salts, or diaryliodonium salts. In some embodiments, the photoacid generator comprises an iodonium salt, a sulfonium salt, a dialkyl-4-hydroxyphenyl sulfonium salt, or a combination thereof.

Useful iodonium salt photoacid generators include bis(4-*tert*-butylphenyl) iodonium hexafluoroantimonate (available as FP5034 from Hampford Research Inc., Stratford, CT), bis(4-*tert*-butylphenyl) iodonium hexafluorophosphate (available as FP5035 from Hampford Research Inc., Stratford, CT), (4-methoxyphenyl)phenyl iodonium triflate, bis(4-*tert*-butylphenyl) iodonium camphorsulfonate, bis(4-*tert*-butylphenyl) iodonium tetraphenylborate, bis(4-*tert*-butylphenyl) iodonium tosylate, bis(4-*tert*-butylphenyl) iodonium triflate, (4-octyloxyphenyl)phenyl iodonium hexafluorophosphate (available as FP5384 from Hampford Research Inc., Stratford, CT), (4-octyloxyphenyl)phenyl iodonium hexafluoroantimonate (available as FP5386 from Hampford Research Inc., Stratford, CT), (4-isopropylphenyl)(4-methylphenyl)iodonium tetrakis(pentafluorophenyl) borate (available as BLUESIL PI 2074 from Elkem Silicones, East Brunswick, NJ), bis(4-methylphenyl) iodonium hexafluorophosphate (available as OMNICAT 440 from IGM Resins, Bartlett, IL), and [4-(2-hydroxy-1-tetradecycloxy)phenyl]phenyl iodonium hexafluoroantimonate.

Useful sulfonium salt photoacid generators include diphenyl(4-phenylthio)phenyl sulfonium hexafluorophosphate, bis(4-diphenylsulfonium phenyl)sulfide bis-(hexafluorophosphate), diphenyl(4-phenylthio)phenyl sulfonium hexafluoroantimonate, bis(4-diphenylsulfonium phenyl)sulfide bis-(hexafluoroantimonate), and blends of these triarylsulfonium salts available from Synasia, Metuchen, NJ, under the trade designations of UVI-6992 and UVI-6976 for the PF₆ and SbF₆ salts, respectively. Other useful sulfonium salt include triphenyl sulfonium hexafluoroantimonate (available as CT-548 from Chitec Technology Corp. Taipei, Taiwan), diphenyl(4-phenylthio)phenyl sulfonium hexafluorophosphate available as CPI-100 from San-Apro Limited, Tokyo Japan, and diphenyl(4-phenylthio)phenyl sulfonium [(R_{f})ₙPF₆₋ₙ], where R_{f} is a perfluorinated alkyl group, available as CPI-200 from San-Apro Limited, Tokyo Japan.

Useful dialkylphenacylsulfonium salt photoacid generators have been described by Crivello. J. V. and Lam, J. H. W. in J. Polym. Sci. Polym. Chem. Ed. 17, 2877 (1979), and an example would be of phenacyltetramethylenesulfonium hexafluorophosphate.

Useful dialkyl-4-hydroxyphenylsulfonium salt photoacid generators have been described by Crivello, J. V. and Lam. J. H. W. in J. Polym. Sci. Polym. Chem. Ed. 18, 1021 (1980), and an example would be dimethyl-3,5-dimethyl-4-hydroxyphenylsulfonium hexafluoroantimonate.

Non-limiting examples of anions complexed with any of the onium salts cations described above are: a halide, SO₂(C₆H₄CH₃)⁻, SO₃CF₃⁻, BF₄,⁻ AsF₆⁻, PF₆⁻, SbF₆⁻, C(SO₂CF₃)₃⁻, CH(SO₂CF₃)₂⁻, B(C₆H₅)₄⁻, B(C₆F₅)₄⁻, and [(R_{f})ₙPF₆₋ₙ]⁻, where R_{f} is a perfluorinated alkyl group.

In select embodiments, the photoacid generator comprises diaryliodonium, triarylsulfonium, or dialkylphenacylsulfonium, or any combination thereof.

Non-limiting examples of thermal acid generators are diaryliodonium salts, trialkylsulfonium salts, dialkyl aryl sulfonium salts, sulfonate esters of oximes, sulfonate esters of benzyl alcohols, sulfonate esters of imides, pyridinium salts such as *N*-alkoxy-pyridinium salts or benzylpyridinium salts, quinolinium salts such as *N*-alkoxy-quinolinium salts, and ammonium salts such as benzyl ammonium salts. Accordingly, there is overlap between acid generators that can generate acid when exposed to actinic radiation. When these thermal acid generators are cationic salts they will contain anions such as a halide, SO₂(C₆H₄CH₃)⁻, SO₃CF₃⁻, BF₄,⁻ AsF₆⁻, PF₆⁻, SbF₆⁻, C(SO₂CF₃)₃⁻, CH(SO₂CF₃)₂⁻, B(C₆H₅)₄⁻, B(C₆F₅)₄⁻, and [(R_{f})ₙPF₆₋ₙ]⁻, where R_{f} is a perfluorinated alkyl group. Examples of thermal acid generators (also known as blocked acids) are supplied from King Industries (Norwalk, CT) under the trade designation K-PURE TAG and K-PURE CXC catalysts, for example, CXC-1612 or CXC-1614, or those from San Apro Ltd. (Kyoto, Japan) under the trade designation TA-60, TA-100, TA-120, and TA-160. Examples oftrialkylsulfonium salts are 2-butenyltetramethylene sulfonium hexafluoroantimonate and 3-methyl-2-butenyltetramethylene sulfonium hexafluoroantimonate.

Suitable acids include inorganic and organic acids including mineral acids such as hydrochloric acid, nitric acid, phosphoric acid, sulfuric acid, boric acid, hydrofluoric acid, hydrobromic acid, perchloric acid, hydroiodic acid, hexafluoroantimonic acid, hexafluorophosphoric acid, and organic acids such as acetic acid, trifluoroacetic acid, benzenesulfonic acid, bis(trifluoromethanesulfonyl)methane, methane sulfonic acid, sulfanilic acid, p-toluenesulfonic acid, tetrakis(pentafluorophenyl)boric acid, and trifluoromethanesulfonic acid.

Useful photobase generators include any compounds that liberate base upon exposure to light, typically at a wavelength of about 320 to 420 nanometers, however, other wavelengths may be suitable. Suitable photobase generators include, but are not limited to: benzyl carbamates, benzoin carbamates, o-carbamoylhydroxyamines, o-carbamoyloximes, aromatic sulfonamides, alpha-lactams, N-(2-allylethenyl)amides, arylazide compounds, N-arylformamides, alkylamidines like 1,5-diazabicyclo[4.3.0]non-5-ene (DBN), 1,8-diazabicyclo[5.4.0]undec-7-ene (DBU), and 4-(ortho-nitrophenyl)dihydropyridines.

The photobase generator is not specifically limited so long as it generates an amine directly or indirectly with actinic irradiation, such as light irradiation. The photobase generator includes for example bis[[(2-nitrobenzyl)oxy]carbonylhexane-1,6-diamine], nitrobenzyl cyclohexyl carbamate, di(methoxybenzyl) hexamethylene dicarbamate, and the compounds of the general formula: (R⁵-NR⁶)ₓ-R⁷, where R⁵ is a photoactive group including benzyloxy groups and formal groups, R⁶ is a hydrogen or alkyl group, R⁷ is a polyvalent alkyl or aryl group, and x is at least 1. It will be understood that the formula represents an amine photobase generator wherein the polyamine liberated by photolysis is of the formula (HNR⁶)ₓ-R⁷.

Preparation of photobase generator compounds is known in the art. See J. Cameron et al., J. Am. Chem. Soc., vol. 113, no. 11, 4303-4313 (1991); J. Cameron et al., J. Polym. Mater. Sci. Eng., 64, 55 (1991); J. Cameron, et al., J. Org. Chem., 55, 5919-5922 (1990); and U.S. 5,650,261 (Winkel).

Photobase generators are further described in M. Shirai et al., Photochemical Reactions of Quaternary Ammonium Dithiocarbamates as Photobase Generators and Their Use in The Photoinitiated Thermal Crosslinking of Poly(glycidylmethacrylate), Journal of Polymer Science, Part A: Polymer Chemistry, vol. 39, pp. 1329-1341 (2001) and M. Shirai et al., "Photoacid and photobase generators: chemistry and applications to polymeric materials", Progress in Polymer Science, vol. 21, pp. 1-45, XP-002299394, 1996.

The use of a photobase generator may produce residue products from the photochemical production of base. Upon exposure to actinic radiation, the photobase generator will photolyze, yielding an amine and a residue compound. For example, a *bis*-benzyl carbamate of a diamine will photolyze to yield the diamine and a phenyl ketone as the "residue of a photobase generator". Oxime esters will yield ketones. The residues may be detected by conventional analytical techniques, such as infrared, ultraviolet and NMR spectroscopy, gas or liquid chromatography, mass spectroscopy, or a combination of such techniques.

Exemplary suitable thermal base generators include those described in U.S. Application Publication No. 2020/0135451 (Zi et al.) and PCT Application Publication No. WO 2015/199219 (Koyama). In some embodiments, a suitable thermal base generator is N-(p-nitrophenyl)-2,6-dimethylpiperidine (NDP), CGI 90 available from BASF (Florham Park, NJ), SCD-PLB 090 available from SCD Dr. Sommerlade Chemistry Design GmbH (Neuenberg am Rhein Germany) and PB-02 from San-Apro Ltd. (Kyoto, Japan).

Suitable bases include substituted and unsubstituted aliphatic or aromatic primary amines, as well as substituted and unsubstituted aliphatic, aromatic, or mixed aliphatic/aromatic secondary and tertiary amines. It is possible to have more than one amine group on the same molecule.

Examples of primary amines are methylamine, ethylamine, n-propylamine, isopropylamine, n-butylamine, t-butylamine, n-pentylamine, sec-pentylamine, the isomeric hexylamines, heptylamines, octylamines, nonylamines, decylamines, undecylamines, dodecylamines, tridecylamines, tetradecylamines, etc., aniline, o-toluidine, m-toluidine, p-toluidine, o-xylidine, m-xylidine, p-xylidine, 2-ethylaniline, 3-ethylaniline, 4-ethylaniline, 2-propylaniline, 3-propylaniline, 4-propylaniline, cyclopentylamine, cyclohexylamine, cycloheptylamine, cyclooctylamine, 4,4'-(1,3-phenylenedioxy)dianiline, etc.

Examples of secondary amines such as dimethylamine, diethylamine, di-n-propylamine, diisopropylamine, di-n-butylamine, di-t-butylamine, di-n-pentylamine, di-sec-pentylamine, the isomeric dihexylamines, diheptylamines, dioctylamines, dinonylamines, didecylamines, diundecylamines, didodecylamines, ditridecylamines, ditetradecylamines, etc. It is possible that the secondary amine is part of a ring such as morpholine, piperidine, pyrrole, imidazolidinone, 1-methyl-2-imidazolidinone, and pyrrolidine.

Some specific examples tertiary amines include trimethylamine, triethylamine, tripropylamine, triisopropylamine, diisopropylethylamine, propyldimethylamine, butyldimethylamine, pentyldimethylamine, hexyldimethylamine, heptyldimethylamine, octyldimethylamine, decyldimethylamine, dodecyldimethylamine, tetradecyldimethylamine, pentadecyldimethylamine, octadecyldimethylamine, eicosyldimethylamine, docosyldimethylamine, propyldiethylamine, octyldiethylamine, nonyldiethylamine, undecyldiethylamine, pentadecyldiethylamine, octadecyldiethylamine, tripropylamine, butyldipropylamine, hexyldipropylamine, nonyldipropylamine, nonyldipropylamine, decyldipropylamine, tridecyldipropylamine, heptadecyldipropylamine, eicosyldipropylamine, tributylamine, pentyldibutylamine, octyldibutylamine, dicyldibutylamine, undecyldibutylamine, tetradecyldibutylamine, nonadecyldibutylamine, phenyldiethylamine, phenyldipropylamine, phenyldioctylamine, phenyldidecylamine, phenylditetradecylamine, phenyldioctadecylamine, phenyldidocosylamine, *N,N*-dimethylcyclohexylamine, cyclohexyldipropylamine, cyclohexyldihexylamine, cyclohexyldidecylamine, cyclohexyldidodecylamine, propyldiphenylamine, hexyldiphenylamine, octyldiphenylamine, undecyldiphenylamine, tetradecyldiphhenylamine, propyldicyclohexylamine, hexyldicyclohexylamine, octyldicyclohexylaamine, undecyldicyclohexylamine, tetradecylidicydlohexylamine, octyldi(p-tolyl)amine, and decyldi(p-tolyl)amine.

It is possible to have more than one amine group on the same molecule, and the amine group could by any combination of primary, secondary, tertiary or heterocyclic. Examples of molecules having more than one amine include aminoethylpiperazine (1-piperazineethaneamine), 1,3-bis(aminomethyl)cyclohexane, 1,3-bis(aminomethyl)benzene (also known as m-xylylenediamine (MXDA)), isophorone diamine, dimethylaminopropylamine, N,N-dimethyldipropylenetriamine, tetraethyenepentamine (TEPA), *N,N,N',N",N"-*pentamethyldiethylenetriamine, tris-2,4,6-dimethylaminomethyl phenol, nicotine, 4-pyrrolidinopyridine, *N*-methylmorpholine, dimorpholinodiethylether, guanidine, 1,1,3,3-tetramethylguanidine, imidazole and substituted imidazoles. Additional materials containing more than one nitrogen group include diazabicyclo compounds, such as diazabicycloalkanes and diazabicyclo alkene salts. Examples of diazabicycloalkanes include diazabicyclooctane, available from Air Products (Allentown, Pennsylvania) under the trade designation DABCO and DABCO WT, 1,8-diazabicyclo[5.4.0]undec-7-ene (DBU), 1,5-diazabicyclo[4.3.0]non-5-ene (DBN), 1,5,7-triazabicyclo[4.4.0]dec-5-ene (TBD), methyl-1,5,7-triazabicyclo[4.4.0]dec-5-ene (MTBD). Examples of amine salts are POLYCAT SA-102 and POLYCAT SA-1 Evonik Nutrition & Care GmbH (Essen, Germany).

Often, the one or more catalysts is present in a (total) amount of 0.25 wt.% or greater, based on the total weight of the investment casting composition, 0.5 wt.% or greater, 0.75 wt.% or greater, 1 wt.% or greater, 1.25 wt.% or greater, 1.5 wt.% or greater, 1.75 wt.% or greater, 2 wt.% or greater, or 2.25 wt.% or greater; and 5 wt.% or less, 4.5 wt.% or less, 4 wt.% or less, 3.5 wt.% or less, 3 wt.% or less, or 2.5 wt.% or less, based on the total weight of the investment casting composition. Stated another way, the catalyst may be present in an amount of 0.25 wt.% to 5 wt.%, based on the total weight of the investment casting composition.

### Additives

The investment casting composition optionally includes one or more additives. Useful additives include for instance and without limitation, a free radical scavenger, a sensitizer, a dye, a pigment, a UV absorber, a filler, or any combination thereof.

Any of the free radical scavenger, dye, pigment, or filler can be employed to control the penetration depth of actinic radiation when actinic radiation is employed in polymerization to form an investment casting pattern. One particularly suitable UV absorber is TINUVIN 326 (2-(5-chloro-2H-benzotriazol-2-yl)-6-(1,1-dimethylethyl)-4-methylphenol), obtained from BASF Corporation, Florham Park, NJ. Another particularly suitable UV absorber that is an optical brightener is Tinopal OB, a benzoxazole, 2,2'-(2,5-thiophenediyl)bis[5-(1,1-dimethylethyl)], also available from BASF Corporation. If present, the optical brightener is often employed in an amount of 0.01 wt.% to 2.0 wt.%, based on the total weight of the investment casting composition.

Free radical scavengers inhibit the formation of or scavenge free radicals, and include hindered amine light stabilizers (HALS), which have been used to protect against photodegradation, and antioxidants, which have been used to protect against thermal oxidation. HALS are light stabilizers, rather than absorbers, and scavenge radicals by production of nitroxyl radicals. Some exemplary HALS include, for example, cyclic amines, secondary, tertiary, acetylated, N-hydrocarbyloxy substituted, hydroxy substituted N-hydrocarbyloxy substituted, or other substituted cyclic amines that are further characterized by a degree of steric hindrance, generally as a result of substitution of an aliphatic group or groups on the carbon atoms adjacent to the amine function. Preferred hindered amine light stabilizers are derivatives of piperidine, such as derivatives of 2,2,6,6-tetramethyl piperidine. They are commercially available from BASF under the trade names TINUVIN and CHIMASSORB. Preferred antioxidants are sterically hindered phenols, thioethers or phosphites. They are commercially available from BASF under the trade names IRGANOX and IRGAFOS. A further suitable antioxidant is butylated hydroxytoluene (BHT), which can also be used as a polymerization inhibitor in embodiments described herein. In addition to or as an alternative, a polymerization inhibitor comprises methoxyhydroquinone (MEHQ). In some embodiments, a polymerization inhibitor, if used, is present in an amount of about 0.001-2 wt.%, based on the total weight of the investment casting composition.

One or more sensitizers may be included to increase the effectiveness of one or more photoinitiators that may also be present. Exemplary suitable ultraviolet radiation absorbing compounds for use as stabilizers include 5-trifluoromethyl-2-(2-hydroxy-3-alpha-cumyl-5-tert-octylphenyl)-2H-benzotriazole, 2-(2-hydroxy-3,5-di-alpha-cumylphenyl)-2H-benzotriazole, 5-chloro-2-(2-hydroxy-3-tert-butyl-5-methylphenyl)-2H-benzotriazole, 5-chloro-2-(2-hydroxy-3,5-di-tert-butylphenyl)-2H-benzotriazole, 2-(2-hydroxy-3,5-di-tert-amylphenyl)-2H-benzotriazole, 2-(2-hydroxy-3 -alpha-cumyl-5 -tert-octylphenyl)-2H-benzotriazole, 2-(3 -tert-butyl-2-hydroxy-5 - methylphenyl)-5-chloro-2H-benzotriazole, 2-(4,6-diphenyl-1,3,5-triazin-2-yl)-5-[(hexyl)oxy]-phenol, and combinations thereof. In some embodiments, a sensitizer comprises isopropylthioxanthone (ITX) or 2-chlorothioxanthone (CTX). Other sensitizers may also be used. If used in the investment casting composition, a sensitizer can be present in an amount ranging from about 0.01% by weight to about 1% by weight, based on the total weight of the investment casting composition.

Colorants are optionally employed, such as dyes, pigments, and pigment dyes. Examples of suitable colorants are as described in U.S. Pat. No.5,981,621 (Clark et al.), and include: 1-hydroxy-4-[4-methylphenylamino]-9,10-anthracenedione (FD&C violet No.2); disodium salt of 6-hydroxy-5-[(4-sulfophenyl)oxo]-2-naphthalenesulfonic acid (FD&C Yellow No.6); 9-(o-carboxyphenyl)-6-hydroxy-2,4,5,7-tetraiodo-3H-xanthen-3-one, disodium salt, monohydrate (FD&C Red No.3); and the like.

Examples of suitable fillers are naturally occurring or synthetic materials including, but not limited to: silica (SiO₂ (e.g., quartz)); alumina (Al₂O₃), zirconia, nitrides (e.g., silicon nitride); glasses and fillers derived from, for example, Zr, Sr, Ce, Sb, Sn, Ba, Zn, and Al; feldspar; borosilicate glass; kaolin (china clay); talc; zirconia; titania; and submicron silica particles (e.g., pyrogenic silicas such as those available under the trade designations AEROSIL, including "OX 50," "130," "150," and "200" silicas from Evonik North America, Parsippany, NJ, and structure modified fumed silicas such as AEROSIL R 7200 available from Evonik North America (Parsippany, NJ), and CAB-O-SIL M5 and TS-720 silica from Cabot Corp., Tuscola, IL). Organic fillers made from polymeric materials are also possible, such as those disclosed in International Publication No. WO09/045752 (Kalgutkar et al.). Fillers may be present in the investment casting composition in an amount of 5 wt.% or greater, based on the total weight of the investment casting composition, 10 wt.% or greater, 15 wt.% or greater, 20 wt.% or greater, 25 wt.% or greater, or 30 wt.% to greater; and 60 wt.% or less, 55 wt.% or less, 50 wt.% or less, 45 wt.% or less, or 40 wt.% or less, based on the total weight of the investment casting composition.

In preparing a composition as described herein, the components (e.g., ethylenically unsaturated monomer(s), hydroxyl-functional poly(alkylene carbonate) polymer, free-radical initiator, catalyst, and other optional components) are thoroughly mixed using any suitable means known by those of ordinary skill in the art. For example, the composition may be mixed by use of any one or more of a speed mixer, a hand mixer, rolling in a container, shaking, or the like. In some embodiments, the components are also heated (e.g., subjected to a temperature ranging from 30°C - 100°C, inclusive).

### Methods

In a second aspect, a method is provided. The method comprises:
a) forming at least one investment casting pattern from an investment casting composition comprising:
   1) at least one ethylenically unsaturated monomer;
   2) a hydroxyl-functional poly(alkylene carbonate) polymer;
   3) a free-radical initiator; and
   4) a catalyst that aids in thermal decomposition of the hydroxyl-functional poly(alkylene carbonate) polymer;
b) investing the at least one investment casting pattern with at least one ceramic slurry to form a mold shell; and
c) heating the mold shell to initiate decomposition of the hydroxyl-functional poly(alkylene carbonate) polymer and to form a ceramic mold.

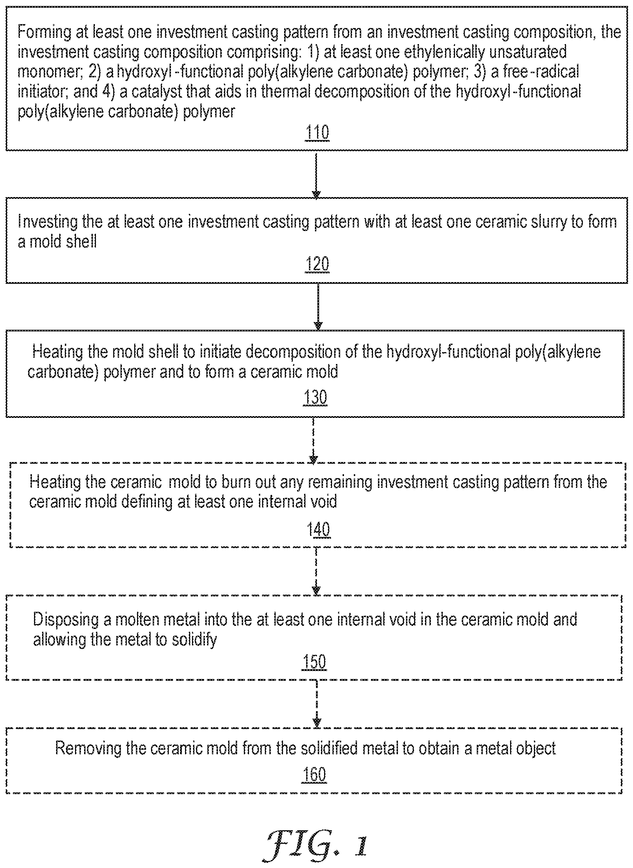

Referring to FIG. 1, a flow chart is provided of the methods of the second aspect. More particularly, the method comprises Step 110 of forming at least one investment casting pattern from an investment casting composition, the investment casting composition comprising: 1) at least one ethylenically unsaturated monomer; 2) a hydroxyl-functional poly(alkylene carbonate) polymer; 3) a free-radical initiator; and 4) a catalyst that aids in thermal decomposition of the hydroxyl-functional poly(alkylene carbonate) polymer. The components of the investment casting composition are each as described in detail above with respect to the first aspect, including optional components described above.

The method further comprises: Step 120 of investing the at least one investment casting pattern with at least one ceramic slurry to form a mold shell; and Step 130 of heating the mold shell to initiate decomposition of the hydroxyl-functional poly(alkylene carbonate) polymer and to form a ceramic mold.

Step 110 of forming at least one investment casting pattern from an investment casting composition may be accomplished by various methods, including molding, casting, spraying, or additive manufacturing, such as using stereolithography (e.g., vat polymerization).

In some embodiments, vat polymerization with Digital Light Processing ("DLP"), employs a container of curable polymer (e.g., investment casting composition). In a DLP based system, a two-dimensional cross section is projected onto the curable material to cure the desired section of an entire plane transverse to the projected beam at one time. One suitable apparatus for use with investment casting compositions is the Rapid Shape D40 II DLP 3D printer (Rapid Shape GmbH, Heimsheim, Germany). All such curable polymer systems as may be adapted to use with the investment casting compositions described herein are intended to fall within the scope of "vat polymerization" or "stereolithography" systems as used herein. In certain embodiments, an apparatus adapted to be used in a continuous mode may be employed, such as an apparatus commercially available from Carbon 3D, Inc. (Redwood City, CA), for instance as described in U.S. Patent Nos. 9,205,601 and 9,360,757 (both to DeSimone et al.).

In some embodiments, during formation into a pattern (e.g., when using additive manufacturing methods like stereolithography) or following formation into a pattern (e.g., when using molding, casting, or spraying), the investment casting composition is exposed to UV radiation, for instance to generate free radicals from an actinic radiation-activated initiator (e.g., having one or more photoinitiator groups). In some embodiments, the composition is exposed to heat, for instance to generate free radicals from a thermally-activated initiator (e.g., a thermal initiator). Optionally, the formed investment casting composition is exposed to each of actinic radiation and heat, and the investment casting composition contains each of a photoinitiator and a thermal initiator. In such cases, the exposure may be simultaneous and/or sequential. When the exposure to each of actinic radiation and heat is sequential, the order of exposure can be either of actinic radiation first or heat first. When the exposure is sequential, there may also be some overlap in exposure to each of actinic radiation and heat. The free radicals generated initiate polymerization of the one or more ethylenically unsaturated monomers. Typically, the extent of crosslinking is proportional to the amount of multifunctional ethylenically unsaturated monomer(s) present in the investment casting composition.

Post-processing of the formed investment casting pattern is optionally performed, for instance including post-curing, cleaning, or both. Cleaning is typically performed to remove uncured investment casting composition from one or more exterior or interior surface of the investment casting pattern, e.g., using any of a solvent (e.g., water, alcohol, and/or blends), compressed gas, centrifugal force, or combinations thereof. Further curing can be accomplished by further irradiating with actinic radiation, heating, or both. Exposure to actinic radiation can be accomplished with any convenient radiation source, generally UV radiation, visible radiation, infrared radiation, gamma radiation, and/or e-beam radiation, for a time ranging from about 10 to over 60 minutes. Heating is generally carried out at a temperature in the range of about 75-150°C, for a time ranging from about 10 to over 60 minutes in an inert atmosphere. So called post cure ovens, which combine UV radiation and thermal energy, are particularly well suited for use in post-cure processes. In general, post curing improves the mechanical properties and stability of the three-dimensional article relative to the same three-dimensional article that is not post-cured.

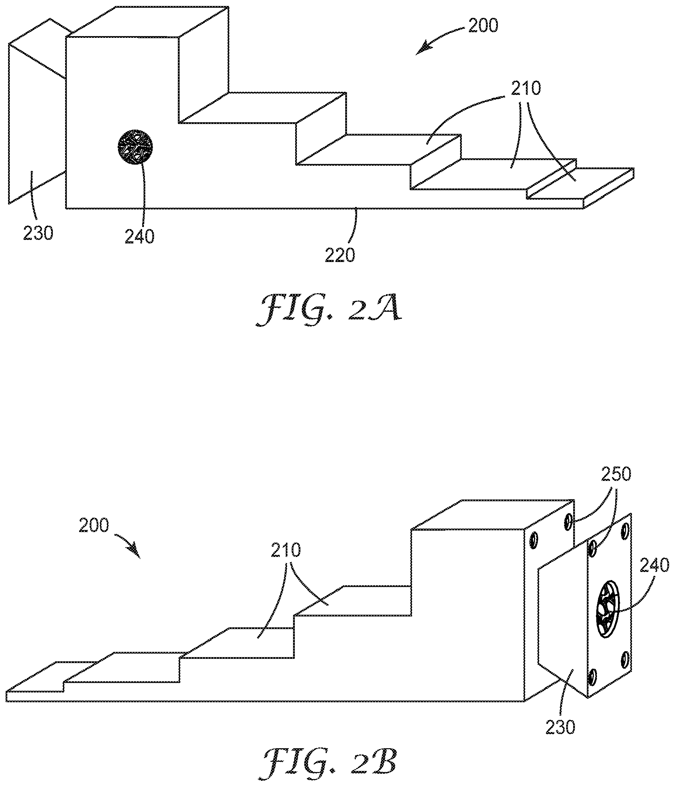

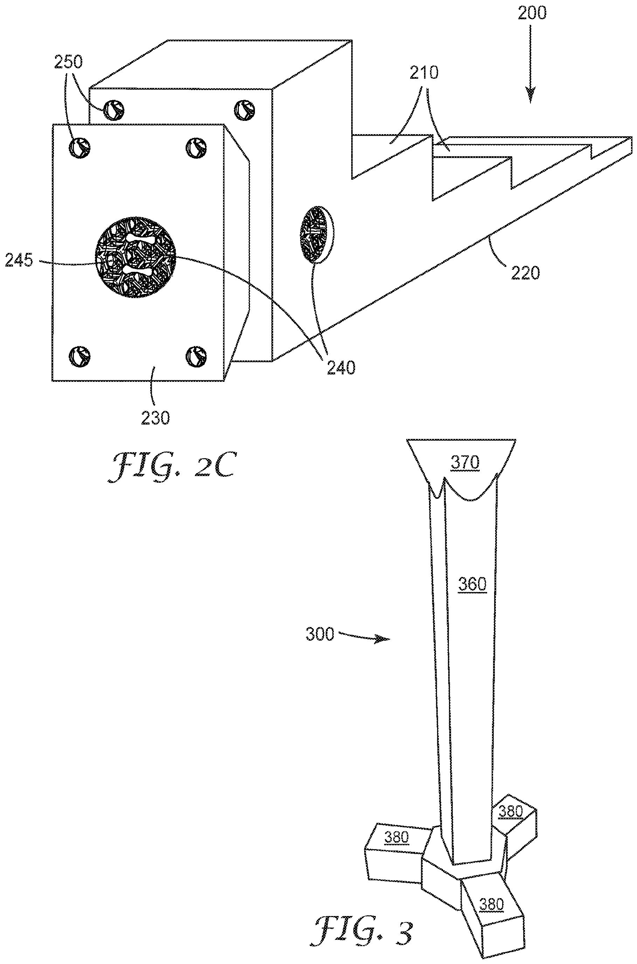

Referring to FIGS. 2A-2C, FIG. 2A provides a schematic perspective view of an investment casting pattern 200, preparable according to the present disclosure. FIGS. 2B and 2C provide alternate perspective views of the same investment casting pattern 200. More particularly, the investment casting pattern 200 comprises a step block geometry having a plurality of steps 210, a back 220 disposed opposite the plurality of steps 210, and a gate 230 affixed to an end of the largest step 210. Use of additive manufacturing to form the investment casting pattern 200 readily enables many various complicated shapes to be prepared. The gate 230 is configured to provide a controlled entrance into an interior (e.g., one or more cavities) of a ceramic mold.

In some embodiments of investment casting patterns, at least one interior portion is present that has a lower density than an exterior portion of the investment casting pattern. For instance, the investment casting pattern 200 of this embodiment defines a vent 240 disposed on each of a side and the gate 230. Each vent 240 includes an optional lattice structure 245. The investment casting pattern 200 thus has a lighter weight than the same pattern made fully solid instead of including an interior lattice structure in at least a portion of the pattern, due to the (e.g., polymeric) lattice structure being surrounded by one or more voids (e.g., gas, such as air). The vent 240 provides a location for gases to escape as well as for decomposed and/or melted pattern material to exit from an interior of the investment casting pattern 200. Typically, the vent 240 is designed to be temporarily plugged or sealed during investment of a ceramic slurry around the investment casting pattern 200 to prevent the investment material from entering the vent 240, and then later have the plug or seal removed to provide fluid communication between the interior and exterior of the investment casting pattern 200. Additionally, the investment casting pattern 200 of this embodiment comprises one or more drain holes 250, which are shown in each of FIGS. 2B and 2C. The drain holes also provide fluid communication between the interior and exterior of the investment casting pattern 200 for decomposed and/or melted pattern material to exit from an interior of the investment casting pattern 200.

Referring to FIG. 3, a schematic perspective view is provided of a support structure 300 that may be used with a plurality of investment casting patterns. This support structure (e.g., also referred to as a "tree") 300 comprises a post 360 having a cup 370 adhered to an upper end and three stabilizing feet 380 attached to an opposite lower end. Typically, the post 360 and the feet 380 are each made of wax, for convenient melting upon subsequent heating. Attachment of a plurality of investment casting patterns to such a support structure is described in the Examples below.

Referring back to FIG. 1, typically Step 120 of investing at least one investment casting pattern with at least one ceramic slurry to form a mold shell comprises dipping the investment casting pattern(s) in a first ceramic slurry to form a first layer, spreading sand on the first layer, and drying the first layer. Often more than one layer is applied, thus the investing may further comprise dipping the investment casting pattern(s) in a second ceramic slurry to form a second layer directly attached to the first layer, spreading sand on the second layer, and drying the second layer. The composition of the ceramic slurry can vary from layer to layer, for instance at least a first layer may contain finer particles than a subsequent layer to provide a smooth surface at the interior of the mold shell. Ceramic slurry compositions are well known; some suitable slurries include those described in detail in PCT Application Publication Nos. WO 2015/168233 (Whitehouse et al.) and WO 2018/085560 (Snyder et al.). Any number of layers may be applied to form a mold shell having the desired thickness, such as three or more layers, four or more layers, five or more layers, six or more layers, or seven or more layers. Typically, fewer than twelve layers are used because the application of each layer adds to the time required to prepare the mold shell.

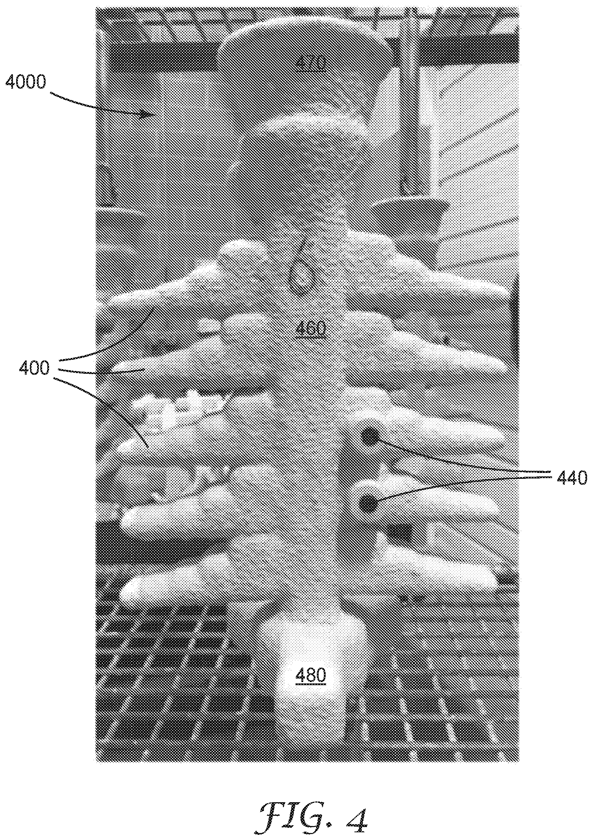

FIG. 4 is a photograph of a mold shell, prepared according to the present disclosure, particularly as described in the Examples below. The mold shell 4000 of FIG. 4 was formed by attaching a plurality of investment casting patterns 200 according to FIGS. 2A-2C to a support structure 300 according to FIG. 3, followed by investment of a plurality of ceramic slurries. The mold shell 4000 in the photograph of FIG. 4 thus comprises a dried shell formed of multiple dried ceramic slurry layers covering each of the plurality of investment casting patterns 400, plus a post 460 to which the investment casting patterns 400, a cup 470, and stabilizing feet 480 are all attached. The mold shell 4000 further comprises two vents 440 to allow decomposed/melted investment casting pattern and/or wax to exit the mold shell 4000 upon heating.

Referring again to FIG. 1, Step 130 of heating the mold shell to initiate decomposition of the hydroxyl-functional poly(alkylene carbonate) polymer and to form a ceramic mold may take place in any conventional equipment, such as in a flash furnace, oven, or steam autoclave. In select embodiments, the heating is performed in a steam autoclave. Typical temperatures for use to heat the mold shell include 80 degrees Celsius or greater, 90 degrees Celsius or greater, 100 degrees Celsius or greater, 110 degrees Celsius or greater, 120 degrees Celsius or greater, or 130 degrees Celsius or greater; and 200 degrees Celsius or less, 190 degrees Celsius or less, 180 degrees Celsius or less, 170 degrees Celsius or less, 160 degrees Celsius or less, 150 degrees Celsius or less, or 140 degrees Celsius or less. In most embodiments, the heating occurs at a pressure of at least ambient pressure (e.g., about 100 kilopascals (kPa)) or greater, 150 kPa or greater, 200 kPa or greater, 250 kPa or greater, 300 kPa or greater, 350 kPa or greater, 400 kPa or greater, 450 kPa or greater, or 500 kPa or greater; and 1,000 kPa or less, 950 kPa or less, 900 kPa or less, 850 kPa or less, 800 kPa or less, 750 kPa or less, 700 kPa or less, 650 kPa or less, 600 kPa or less, or 550 kPa or less. When the heating occurs in an autoclave, the minimum pressure applied may be 400 kPa. Stated another way, the heating of the mold shell to initiate decomposition of the hydroxyl-functional poly(alkylene carbonate) polymer may comprise heating at a temperature of 80 degrees Celsius to 200 degrees Celsius at a pressure of ambient pressure to 1,000 kPa.

Methods according to the present disclosure optionally comprise one or more additional steps. For instance, often Step 140 will be performed, the step of heating the ceramic mold to burn out any remaining investment casting pattern from the ceramic mold. After removal of the investment casting pattern, the empty ceramic mold defines at least one internal void. Use of the ceramic mold typically involves Step 150 of disposing a molten metal (including metal alloys) into the at least one internal void in the ceramic mold and allowing the metal to solidify, and Step 160 of removing the ceramic mold from the solidified metal to obtain a metal object.

### EXAMPLES

The following Examples are set forth to describe additional features and embodiments of the invention. All parts are by weight unless otherwise indicated. Objects and advantages of this invention are further illustrated by the following examples, but the particular materials and amounts thereof recited in these examples, as well as other conditions and details, should not be construed to unduly limit this invention. These examples are merely for illustrative purposes only and are not meant to be limiting on the scope of the appended claims. Unless otherwise noted or readily apparent from the context, all parts, percentages, ratios, etc. in the Examples and the rest of the specification are by weight.

**TABLE 1: MATERIALS**

| **Designation** | **Description/Source** |
|---|---|
| PPC1000 | A 1000 MW polypropylene carbonate) diol polymer having a hydroxyl number of 106 mg KOH/g polymer, having the trade designation CONVERGE 212-10 from Aramco Performance Materials, LLC (Houston, TX). |
| PPC2000 | A 2000 MW polypropylene carbonate) diol polymer having a hydroxyl number of 68 mg KOH/g polymer, having the trade designation CONVERGE 212-20 from Aramco Performance Materials, LLC (Houston, TX). |
| SR531 | Cyclic trimethylolpropane formal acrylate obtained from Sartomer USA (Exton, PA) under the trade designation SR531 |
| TBA | Tertiary-butyl acrylate obtained from BASF (Florham Park, NJ) under the trade designation TBA |
| SR833S | Tricyclodecane dimethanol diacrylate obtained from Sartomer USA (Exton, PA) under the trade designation SR833S |
| TPO-L | Ethyl phenyl (2,4,6-trimethylbenzoyl) phosphinate obtained from IGM Resins USA (Charlotte, NC) under the trade designation OMNIRAD TPO-L |
| DABCO | 1,4-Diazabicyclo[2.2.2]octane obtained from Alfa Aesar (Ward Hill, MA) |
| DABCO/ ⁱPrOH | A solution prepared by a 1:1 parts by weight blend of DABCO and isopropanol |
| DBU | 1,8-Diazabicyclo[5.4.0]undec-7-ene obtained from Alfa Aesar (Ward Hill, MA) |
| DBN | 1,5-Diazabicyclo[4.3.0]non-5-ene obtained from Alfa Aesar (Ward Hill, MA) |
| TBD | 1,5,7-Triazabicyclo[4.4.0]dec-5-ene obtained from MilliporeSigma (St. Louis, MO) |
| TBD/Prop. Carb. | A solution prepared by a 1:1 parts by weight blend of TBD (1,5,7-Triazabicyclo[4.4.0]dec-5-ene) in propylene carbonate. |
| DMCHA | *N,N*-Dimethylcyclohexylamine obtained from Alfa Aesar (Ward Hill, MA) |
| DMA | *N,N*-Dimethylaniline obtained from Alfa Aesar (Ward Hill, MA) |
| CHA | Cyclohexylamine obtained from Alfa Aesar (Ward Hill, MA) |
| FA-513AS | Dicyclopentanyl acrylate obtained from Hitachi Chemical (Tokyo, Japan) under the trade designation FANCRYL FA-513AS |
| FA-512MT | Dicyclopentenyloxyethyl methacrylate obtained from Hitachi Chemical (Tokyo, Japan) under the trade designation FANCRYL FA-512MT |
| IBXA | Isobornyl acrylate obtained from Osaka Organic Chemical Ind. LTD, (Osaka, Japan) under the trade designation IBXA |
| SR340 | 2-Phenoxyethyl methacrylate obtained from Sartomer USA (Exton, PA) under the trade designation SR340 |
| PI 2074 | 4-Isopropyl-4'-methyldiphenyliodonium tetrakis(pentafluorophenyl)borate obtained from Elkem Silicones USA (East Brunswick, NJ) under the trade designation BLUESIL PI 2074 |
| BDK | 2,2-Dimethoxy-1,2-diphenylethan-1-one obtained from IGM Resins USA (Charlotte, NC) under the trade designation OMNIRAD BDK |
| CXC-1612 | Antimony hexafluoride based thermal acid generator obtained from King Industries (Norwalk, CT) under the trade designation K-PURE CXC-1612 |
| Prop. Carb. | Propylene carbonate obtained from Alfa Aesar (Ward Hill, MA) |
| BDK/Prop. Carb. | A solution prepared by a 1:1 parts by weight blend of BDK (2,2-Dimethoxy-1,2-diphenylethan-1-one) in propylene carbonate. |
| PrOH | Isopropanol (2-propanol) from Thermo Fisher Scientific, Waltham, Massachusetts |

### ACIDS AS DECOMPOSITION CATALYSTS

### Preparation of Stock Solutions

To examine the thermal stability of formulations containing polypropylene carbonate) diol polymer in cured (meth)acrylate resins, formulations were prepared using the components listed in Table 2. For each stock solution, the components were added to a glass jar, heated to 80°C for 4 hours, with periodic hand-stirring using a wooden applicator stick to ensure complete dissolution of the polypropylene carbonate) diol polymer.

**TABLE 2: COMPONENTS OF STOCK SOLUTIONS**

| **Stock Solutions** | **SR531 (g)** | **Monomer #2 Identity** | **Monomer #2 (g)** | **PPC2000 (g)** |
|---|---|---|---|---|
| Stock-1A | 6.4844 | TBA | 6.3346 | 8.4444 |
| Stock-1B | 6.3046 | FA-513AS | 6.4052 | 8.4027 |
| Stock-1C | 6.4274 | FA-512MT | 6.3131 | 8.4050 |
| Stock-1D | 6.2808 | IBOA | 6.2613 | 8.3475 |
| Stock-1E | 6.7647 | SR340 | 6.7556 | 9.0051 |
| Stock-1F | 6.3093 | TBA | 6.3043 | 8.4017 |
| Stock-1G | 6.3026 | FA-513AS | 6.3049 | 8.4013 |
| Stock-1H | 6.3001 | FA-512MT | 6.3039 | 8.4004 |
| Stock-1I | 6.3014 | IBOA | 6.3038 | 8.4007 |
| Stock-1J | 6.3002 | SR340 | 6.3026 | 8.4008 |

### Preparation of Examples Containing a Photoacid Generator and Comparative Examples

Formulations for Examples and Comparative Examples were prepared by admixing the components of Table 2 in a polypropylene Max 10 mixing cup (Part 501 226 FlackTek Inc., Landrum, South Carolina). In formulations containing the PI 2074, the solid PI 2074 was combined with the BDK/Prop. Carb. mixture to dissolve the PI 2074 before the resins were added. The samples were mixed on a SPEEDMIXER (FlackTek SpeedMixer Inc., Landrum, South Carolina) at 1500 revolutions per minute (rpm) for 30 seconds.

After mixing, a portion was sandwiched between release liners and glass slides using the following procedure. A sample of silicone-treated polyethylene terephthalate) (PET) release liner film (2 inches (51 mm) x 3 inches (76 mm) x 0.002 inches (0.051 mm)) was placed aligned on one surface of a 2 inches (51 mm) x 3 inches (76 mm) x 0.04 inches (1 mm) glass microscope slide (VWR, Radnor, Pennsylvania). To the glass slide/film construction was applied a layer of 2 inches (51 mm) x 3 inches (76 mm) x 0.031 inches (0.794 mm) silicone rubber spacer (Lot 280176, # DSP7038GP-032-36, 70 DUROMETER red specification grade silicone, Diversified Silicone Products, Santa Fe, California) that contained a hand-cut opening (approximately 1.0 inch (25 mm) x 2 inches (51 mm)). A portion of each formulation was transferred within the opening of the rubber spacer, and then a second silicone-treated PET film and glass slide was applied on top of the liquid formulation to spread it out. The resulting glass slide construction was clamped along the shorter edges using two small metal binder clips (Model 10667CT available from Staples Inc. Framingham, Massachusetts).

**TABLE 3: COMPONENTS OF COMPARATIVE EXAMPLES AND EXAMPLES CONTAINING A PHOTOACID GENERATOR**

| **Examples** | **Stock Solution** | **Stock Solution (g)** | **SR833S (g)** | **Mass of TPO-L (g)** | **BDK/Prop. Carb. (g)** | **PI 2074** |
|---|---|---|---|---|---|---|
| C1 | 1A | 3.6069 | 0.4079 | 0.0419 | --- | --- |
| C2 | 1B | 3.6018 | 0.4011 | 0.0479 | --- | --- |
| C3 | 1C | 3.6063 | 0.4163 | 0.0508 | --- | --- |
| C4 | 1D | 3.6189 | 0.4016 | 0.0471 | --- | --- |
| C5 | 1E | 3.6036 | 0.4083 | 0.0490 | --- | --- |
| C6 | 1F | 3.6042 | 0.4086 | --- | 0.0802 | --- |
| C7 | 1G | 3.6229 | 0.4210 | --- | 0.0815 | --- |
| C8 | 1H | 3.6399 | 0.4168 | --- | 0.0800 | --- |
| C9 | 1I | 3.6208 | 0.4057 | --- | 0.0808 | --- |
| C10 | 1J | 3.6200 | 0.4160 | --- | 0.0803 | --- |
| Example 1 | 1A | 3.6140 | 0.4112 | --- | 0.0803 | 0.0395 |
| Example 2 | 1B | 3.6025 | 0.4027 | --- | 0.0850 | 0.0399 |
| Example 3 | 1C | 3.6126 | 0.4058 | --- | 0.0811 | 0.0406 |
| Example 4 | 1D | 3.6007 | 0.4093 | --- | 0.0816 | 0.0409 |
| Example 5 | 1E | 3.6237 | 0.4231 | --- | 0.0794 | 0.0407 |

The curable formulations within the glass slide constructions were cured using an OMNICURE AC475 LED (Excelitas Technologies Corp., Waltham, MA) with an output wavelength of 365 nm. The LED unit was positioned 2 inches (51 mm) from the glass slide constructions, and each formulation was irradiated for 30 seconds using 100% power.

After cure, a sample of each formulation was analyzed on a thermogravimetric analyzer (DISCOVERY TGA from TA Instruments Inc., New Castle, Delaware) under nitrogen purge using a temperature ramp of 5°C/minute from room temperature (23°C) to 500°C. The data was analyzed to determine the temperatures at which the samples show weight loss of 10%, 20%, and 30% respectively.

**TABLE 4: THERMOGRAVIMETRIC RESULTS OF CURE SAMPLES**

| Example | Temperature at 10% Weight Loss (°C) | Temperature at 20% Weight Loss (°C) | Temperature at 30% Weight Loss (°C) |
|---|---|---|---|
| C1 | 220.9 | 231.0 | 236.4 |
| C2 | 227.4 | 244.2 | 251.9 |
| C3 | 224.4 | 236.5 | 242.0 |
| C4 | 244.3 | 267.2 | 284.5 |
| C5 | 228.4 | 242.0 | 248.2 |
| C6 | 227.0 | 237.3 | 245.4 |
| C7 | 204.3 | 215.8 | 225.0 |
| C8 | 198.5 | 210.6 | 220.4 |
| C9 | 218.5 | 237.9 | 252.4 |
| C10 | 214.0 | 227.3 | 236.5 |
| Example 1 | 112.2 | 131.2 | 149.6 |
| Example 2 | 147.6 | 175.2 | 197.4 |
| Example 3 | 153.8 | 191.1 | 233.0 |
| Example 4 | 131.7 | 150.9 | 168.9 |
| Example 5 | 132.6 | 149.3 | 179.7 |

The results in Table 4 show that the formulations containing the photoacid generator have significantly lower decomposition temperatures than those without the photoacid generator. This lower decomposition temperature should enable these formulations to not only soften to prevent cracking of the investment (e.g., mold shell or ceramic mold), but also at least partially volatilize in the autoclave to reduce the amount of material needing to be burned out in subsequent processing steps.

### ORGANIC BASES AS DECOMPOSITION CATALYSTS

### Preparation of Examples Containing Organic Bases and a Comparative Example

Additional formulations were prepared to evaluate the effect of organic bases as decomposition catalysts on light-curable formulations containing polypropylene carbonate) diol polymers. Formulations for Examples containing organic bases, and one Comparative Example, were prepared by admixing the components of Table 5 in polypropylene Max 10 mixing cups (Part 501 226 FlackTek Inc., Landrum, South Carolina). Each formulation was mixed on a SPEEDMIXER (FlackTek SpeedMixer Inc., Landrum, South Carolina) at 1500 revolutions per minute (rpm) for 30 seconds. After mixing, each formulation was sandwiched between glass slides and PET liners, and cured under the 365 nm LED, as described above. The results of the TGA analysis are shown in Table 6.

**TABLE 5: COMPONENTS OF COMPARATIVE EXAMPLE AND EXAMPLES CONTAINING ORGANIC BASES**

| **Formulations** | **SR531 (g)** | **TBA (g)** | **SR833S (g)** | **PPC1000 (g)** | **TPO-L (g)** | **Base Additive Identity** | **Base Additive (g)** |
|---|---|---|---|---|---|---|---|
| C11 | 1.02 | 1.01 | 1.02 | 2.00 | 0.050 | --- | --- |
| Example 6 | 1.02 | 1.00 | 1.01 | 2.01 | 0.051 | DBU | 0.0521 |
| Example 7 | 1.00 | 1.00 | 1.00 | 2.00 | 0.051 | DBU | 0.0261 |
| Example 8 | 1.00 | 1.00 | 1.00 | 2.00 | 0.052 | DBU | 0.0123 |
| Example 9 | 1.00 | 1.00 | 1.00 | 2.00 | 0.052 | DBU | 0.0055 |
| Example 10 | 1.00 | 1.01 | 1.03 | 2.01 | 0.051 | DBN | 0.0505 |
| Example 12 | 1.01 | 1.01 | 1.02 | 2.00 | 0.025 | TBD/Pro p. Carb. | 0.0500 |
| Example 13 | 1.00 | 1.01 | 1.00 | 2.00 | 0.049 | DMCHA | 0.0541 |
| Example 14 | 2.00 | 2.01 | 2.02 | 4.01 | 0.102 | CHA | 0.1002 |
| Example 15 | 2.00 | 2.001 | 2.01 | 4.00 | 0.103 | CHA | 0.0507 |
| Example 16 | 1.01 | 1.00 | 1.01 | 2.01 | 0.053 | DMA | 0.0590 |
| Example 17 | 1.02 | 1.01 | 1.00 | 2.01 | 0.053 | DABCO/ ⁱPrOH | 0.0995 |
| Example 18 | 1.01 | 1.00 | 1.00 | 2.00 | 0.051 | DABCO/ ⁱPrOH | 0.0576 |

**TABLE 6: THERMOGRAVIMETRIC ANALYSIS OF CURE SAMPLES**

| Example | Temperature at 10% Weight Loss (°C) | Temperature at 20% Weight Loss (°C) | Temperature at 30% Weight Loss (°C) |
|---|---|---|---|
| C11 | 203.71 | 224.70 | 232.96 |
| Example 6 | 128.63 | 175.00 | 235.91 |
| Example 7 | 108.09 | 148.68 | 212.14 |
| Example 8 | 120.80 | 168.52 | 230.69 |
| Example 9 | 125.72 | 172.79 | 231.08 |
| Example 10 | 125.47 | 173.15 | 236.23 |
| Example 12 | 131.22 | 182.31 | 238.67 |
| Example 13 | 155.02 | 196.67 | 223.30 |
| Example 14 | 179.53 | 208.74 | 224.15 |
| Example 15 | 196.13 | 223.76 | 232.91 |
| Example 16 | 192.28 | 227.01 | 234.94 |
| Example 17 | 141.97 | 150.05 | 162.54 |
| Example 18 | 153.51 | 161.38 | 173.79 |

The results in Table 6 show that the formulations containing the organic bases have lower decomposition temperatures than those without the organic base. The amidine bases (i.e. DBU, DBN, TBD) showed the greatest effect on reducing the decomposition temperature of these formulations. This lower decomposition temperature should enable these formulations to not only soften to prevent cracking of the investment, but also at least partially volatilize in the autoclave to reduce the amount of material needing to be burned out in subsequent processing steps.

### THERMAL ACID GENERATORS AS DECOMPOSITION CATALYSTS

Preparation of CXC-1612/Propylene Carbonate (1:1) Stock Solution: To a glass vial was added CXC-1612 (0.501 g) followed by propylene carbonate (0.508 g). The mixture was hand-stirred using a metal spatula until a homogeneous solution was obtained.

Preparation of SR531/TBA/SR833S/ PPC1000 (20:20:20:40) ("TAG Resin Stock"): To a 4 oz (approximately 120 mL) glass jar was added SR531 (20.0 g), TBA (20.0 g), SR833S (20.0 g), and PPC1000 (40.0 g). The mixture was capped and heated to 70°C for 1 hour, with intermittent hand shaking to help dissolve the PPC1000. After 1 hour the mixture appeared homogeneous upon visual inspection and was allowed to cool to room temperature, at which time the TPO-L (1 g) was added. The mixture was hand-shaken to ensure uniform mixing of the TPO-L initiator.

### Preparation of Examples Containing the thermal acid generator and Comparative Example Formulations:

Examples and a Comparative Example were prepared by admixing the components of Table 7 in a polypropylene Max 10 mixing cup (Part 501 226 FlackTek Inc., Landrum, South Carolina). In formulations containing the PI 2074, the solid PI 2074 was combined with the BDK/Prop. Carb. mixture to dissolve the PI 2074 before the resins were added. The samples were mixed on a SPEEDMIXER (FlackTek SpeedMixer Inc., Landrum, South Carolina) at 1500 revolutions per minute (rpm) for 30 seconds.

**TABLE 7: COMPONENTS OF COMPARATIVE EXAMPLE AND EXAMPLES CONTAINING A THERMAL ACID GENERATOR**

| **Formulations** | **TAG Resin Stock (g)** | **Prop. Carb. (g)** | **CXC-1612: Prop. Carb. Soln. (g)** |
|---|---|---|---|
| C12 | 5.001 | 0.049 | --- |
| Example 19 | 5.012 | --- | 0.102 |
| Example 20 | 5.013 | --- | 0.052 |
| Example 21 | 5.005 | --- | 0.024 |

After mixing, glass slide sandwiches of the formulations in Table 5 were prepared and photocured as described above, with the exception that irradiation with the 365 nm LED was for only 20 seconds at 20% power to reduce heat generation.

After cure, a sample of each formulation was analyzed on a thermogravimetric analyzer (DISCOVERY TGA from TA Instruments Inc., New Castle, Delaware) under nitrogen purge using a temperature ramp of 5°C/minute from room temperature (23°C) to 500°C. The data was analyzed to determine the temperatures at which the samples show weight loss of 10%, 20%, and 30% respectively.

**TABLE 8: THERMOGRAVIMETRIC RESULTS OF CURE SAMPLES**

| Example | Temperature at 10% Weight Loss (°C) | Temperature at 20% Weight Loss (°C) | Temperature at 30% Weight Loss (°C) |
|---|---|---|---|
| C11 | 203.71 | 224.70 | 232.96 |
| C12 | 181.35 | 206.82 | 222.73 |
| Example 19 | 163.55 | 179.20 | 193.50 |
| Example 20 | 166.90 | 183.90 | 197.61 |
| Example 21 | 173.12 | 188.29 | 200.00 |

### INVESTMENT CASTING COMPOSITIONS

### Preparation of an Exemplary Investment Casting Composition (e.g., 3D-Printable Resin)

To show use in additive manufacturing (e.g., 3D-printability) and also the effect on the investment casting, an investment casting composition (e.g., 3D-printable resin formulation) was prepared by admixing the four resins (SR351, TBA, SR833S, PPC2000) of Table 9 in a metal, 1 gallon (3.79 L) paint can and heating to 70°C for 3 hours with periodic hand stirring using a wide blade metal spatula (Product 82027-466 from VWR International, Radnor, Pennsylvania) until the mixture was visibly miscible. After cooling to room temperature (approximately 23°C) the TPO-L and a solution of the PI 2074/BDK/Prop. Carb. (preformed separately, using the amounts in Table 9) were added with hand stirring. The resulting mixture was degassed in a vacuum oven at room temperature.

**TABLE 9: COMPONENTS OF INVESTMENT CASTING COMPOSITION ICC-1 (ICC-1)**

| Component | Amount (g) |
|---|---|
| SR351 | 291.30 |
| TBA | 291.22 |
| SR833S | 291.18 |
| PPC2000 | 582.40 |
| PI 2074 | 14.42 |
| BDK | 14.40 |
| Prop. Carb. | 14.89 |
| TPO-L | 29.22 |

Samples of ICC-1 were printed using a Rapid Shape D40 II DLP 3D printer (Rapid Shape GmbH, Heimsheim, Germany). The sample tray was filled with the appropriate resin solution and the printing carried out with the parameters listed in Table 10.

**TABLE 10: PRINT PARAMETERS USED FOR SAMPLE PRODUCTION.**

| **Parameter** | **Value** | **Units** |
|---|---|---|
| LED power | 20 | W/m² |
| Layer height | 100 | µm |
| Energy dosage | 400 | mJ/dm² |
| Support width | 150 | µm |
| Shrinkage factor | 0.2 | % |
| Burn in factor | 200 | % |

The samples were printed in a step block geometry with an attached gate, and in some cases, a vent hole in the side, as shown in FIGS. 2A-2C described above. The step blocks were 5 inches (12.70 cm) long, 1.0 inch (2.54 cm) wide, and 1.4375 inches (3.65 cm) tall. The steps measured approximately 0.0625 inches (0.159 cm), 0.1875 inches (0.476 cm), 0.375 inches (0.953 cm), 0.6875 inches (1.746 cm), and 1.4375 inches (3.651 cm) tall respectively, and were 1.0 inch (2.54 cm) long by 1.0 inch (2.54 cm) wide with the exception of the thinnest step and the gate, which were both 0.5 inches (1.27 cm) long. The step blocks were internally supported by a hexagonal lattice with 8 mm spacing and had an external wall thickness of 800 µm (generated in NETFABB PREMIUM software, (AutoDesk, San Rafael, California, USA). In addition, all edges and corners were filleted with a 500 µm radius. The step blocks also included small drain holes in both the gate side and the bottom, to allow resin to drain during and after the printing process. Samples were supported from the flat bottom surface and were printed starting with this surface using the burn-in factor specified in TABLE 10.

Following printing, samples were allowed to drain, then were removed from the print bed with a spatula. They were then immersed in isopropyl alcohol (IPA) for three minutes each with occasional aggitation. Following soak, samples were removed from IPA and drained. This washing process was repeated a second time, with a separate IPA bath. Following the second IPA soak, the samples were placed in a FORM WASH (Formlabs, Somerville, Massachusetts, USA) cleaning apparatus, also filled with IPA, and allowed to clean for 3 minutes with gentle agitation before getting a final purge with compressed air. The parts were subsequently dried for several hours inside a fume hood. Postcuring was performed with a FORM CURE (Formlabs) apparatus that contains 13 multidirectional 405 nm LEDs for a combined LED power of 39 W, and is also capable of simultaneously heating the parts. During postcuring, parts were placed in the FORM CURE and irradiated for 60 minutes at 40°C. Lab nitrogen gas was also supplied to the FORM CURE to prevent oxygen inhibition during the postcure process. After postcurring, samples of the investment casting pattern were stored in polyolefin zip top bags, in dark conditions, until testing.

Additional control sample parts were sourced from external vendors. These control samples were printed with the same geometry as the ICC-1 samples, with the exception that some of the samples were not filletted on the edges and corners. Sourced samples were printed from various commercially available resins, including: ACCURA CASTPRO (3D Systems, Rock Hill, South Carolina), a resin designed for investment casting; SOMOS ELEMENT (DSM, Elgin, Illinois), also designed for investment casting; and SOMOS WATERSHED 11122 (DSM, Elgin, Illinois), a clear, moisture-resistant resin. All control samples were used as supplied by the vendors with no additional post-curing.

Prior to testing, all drain holes in the sample parts were filled with wax, using rectangle or square wax wires manufactured by Grobet USA and commercially available from Amazon.com, to prevent material from entering during the investment process. The samples were then adhered to wax trees using ¼ inch diameter round sprue wax manufactured by Grobet USA and commercially available from Amazon.com. These trees consisted of square prisms made of wax that had three wax legs adhered to the bottom and a ceramic cup adhered to the top, as shown in FIG. 3. Sample parts were adhered to the tree by locally heating the wax of the tree to its melting point and then dipping the gate portion of the sample into conventional industry "sticky wax", and finally pressing the gate portion of the sample to the molten wax of the tree. Additional local heating was used to ensure the sample had formed a seal with the wax. Wax vent hole plugs were also applied to samples with vent holes. These wax plugs were formed from Ferris brand Jewelers Wax Wire and commercially available from Amazon.com, then were partially melted and pressed over the vent hole to both form a seal and to give an indication of where the vent was located so that it could be reopened in a later step. Trees typically had samples adhered to two sides of the square prism wax tree, with between three and five parts per side, for a total of six to ten parts per tree.

Completed trees were then coated with investment to form mold shells, using 3M Fused Silica Advanced Shell System WDS3 (3M Company, St. Paul, MN). One prime coat, with finer, 50/100 fused silica (sand), were used, followed by six regular coats of coarser grain 30/50 fused silica, and finally a sealing coat that did not contain any sand, for a total of eight coats. The typical process was to dip a tree into the 3M Fused Silica Advanced Shell System WDS3 investment slurry and then immediately coat the wet tree with sand. Between each coating of slurry and sand, the trees were allowed to air dry. Following drying of the final seal coating, the investment over the vent holes was removed with an angle grinder. The wax plug that was used to seal the vent was subsequently removed by inserting a heated soldering iron and melting the wax. One mold shell is shown in FIG. 4.

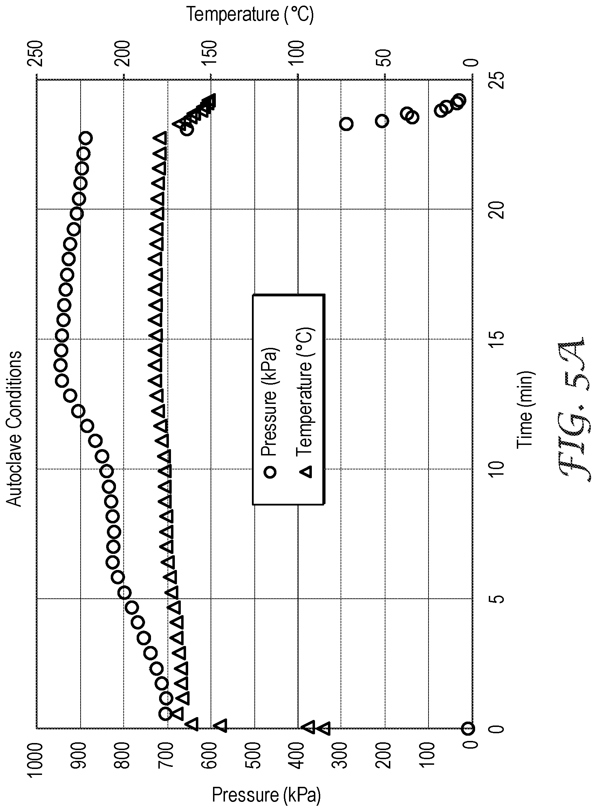

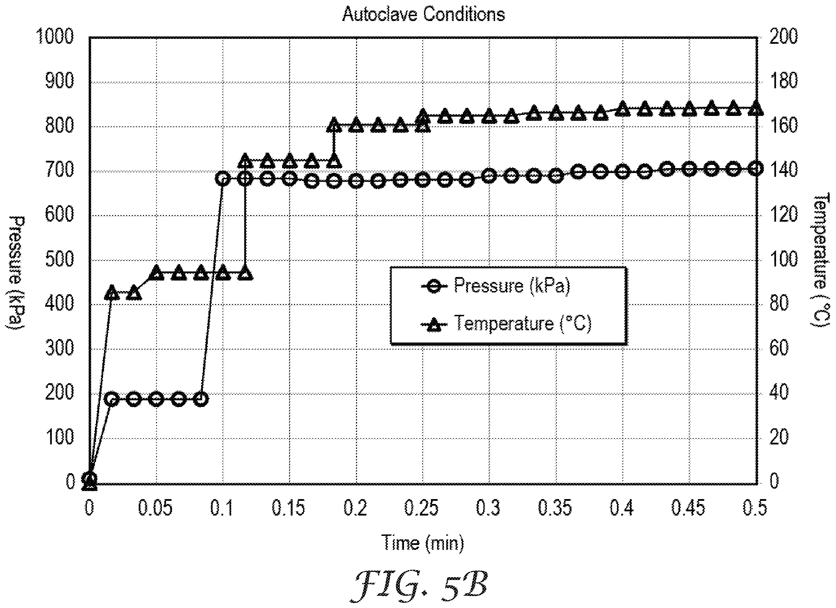

Sample trees (e.g., mold shells) were then placed in a tray and wired to crossbars for support. They were placed upside down with the cup facing the bottom of the tray so that any wax that melted out would run through the mesh in the bottom of the tray. The tray and sample trees were then placed inside an industrial high-pressure steam autoclave and the door sealed. The autoclave was pressurized with heated steam, with temperature and pressure of a typical run shown in FIGS. 5A-5B, to form ceramic molds. Following the autoclave process, the pressure was released at the rate shown in FIG. 5A, and the sample ceramic mold trees were removed.

The ceramic mold trees were then inspected for any cracks or fractures in the investment surrounding the individual parts, and the results are shown in Table 11. Samples were rated according to the amount of cracking or fracture evident in the investment surrounding the parts. Samples were also differentiated by whether they were vented or unvented.

**TABLE 11: AUTOCLAVE TESTING RESULTS**

| **Resin** | **CASTPRO** | | | **ELEMENT** | **WATERSHED** | **ICC-1** | | |
|---|---|---|---|---|---|---|---|---|
| **Condition** | **All** | **No Vent s** | **Vented** | **Vented** | **Vented** | **All** | **No Vents** | **Vented** |
| **Count** | 28 | 11 | 17 | 10 | 9 | 25 | 11 | 14 |
| **% with no cracking** | 61% | 55% | 65% | 0% | 22% | 100% | 100% | 100% |
| **% with minor/hairl ine fractures** | 79% | 64% | 88% | 0% | 56% | 100% | 100% | 100% |
| **% that were repairable** | 82% | 73% | 88% | 0% | 56% | 100% | 100% | 100% |

As can be seen from Table 11, 82% of all CASTPRO control samples survived the autoclave process, while some exhibited cracking. The other two controls, WATERSHED and ELEMENT did not perform as well with 56% and 0% surviving, respectively. The ICC-1 samples showed 100% survived the autoclave process, and all did so without any cracking of the investment (e.g., ceramic mold). This is in sharp contrast to the CASTPRO samples which, even though they had a relatively high survival rate, had only 61% of samples survive without cracking.

It should be understood that this disclosure is not intended to be unduly limited by the illustrative embodiments and examples set forth herein and that such examples and embodiments are presented by way of example only with the scope of the disclosure intended to be limited only by the claims set forth herein as follows.

## Claims

1. An investment casting composition comprising:
a) at least one ethylenically unsaturated monomer;
b) a hydroxyl-functional poly(alkylene carbonate) polymer;
c) a free-radical initiator; and
d) a catalyst that aids in thermal decomposition of the hydroxyl-functional poly(alkylene carbonate) polymer.

2. The composition of claim 1, wherein the at least one ethylenically unsaturated monomer comprises a multifunctional monomer.

3. The composition of claim 1 or claim 2, wherein the at least one ethylenically unsaturated monomer comprises a (meth)acryl group, a styrenic group, or a vinyl ether group.

4. The composition of any of claims 1 to 3, wherein the hydroxyl-functional poly(alkylene carbonate) polymer has a number average molecular weight of up to 50,000 g/mol or of 700 g/mol to 2,000 g/mol.

5. The composition of any of claims 1 to 4, wherein the catalyst comprises at least one of a photoacid generator, a thermal acid generator, or an acid, wherein the catalyst optionally comprises a photoacid generator comprising an onium salt.

6. The composition of any of claims 1 to 4, wherein the thermal decomposition catalyst comprises at least one of a photobase generator, a thermal base generator, or a base.

7. The composition of any of claims 1 to 6, wherein the at least one ethylenically unsaturated monomer is present in an amount of 20 weight percent (wt.%) to 80 wt.%, based on the total weight of the composition, and optionally wherein the hydroxyl-functional poly(alkylene carbonate) polymer is present in an amount of 20 wt.% to 80 wt.%, based on the total weight of the composition.

8. The composition of any of claims 1 to 7, wherein the catalyst is present in an amount of 0.25 wt.% to 5 wt.%, based on the total weight of the composition.

9. The composition of any of claims 1 to 8, further comprising an optical brightener in an amount of 0.01 wt.% to 2.0 wt.%, based on the total weight of the composition.

10. The composition of any of claims 1 to 9, further comprising at least one additive selected from a free radical scavenger, a sensitizer, a dye, a pigment, a filler, or any combination thereof.

11. A method comprising:
a) forming at least one investment casting pattern from an investment casting composition, the investment casting composition comprising: 1) at least one ethylenically unsaturated monomer; 2) a hydroxyl-functional poly(alkylene carbonate) polymer; 3) a free-radical initiator; and 4) a catalyst that aids in thermal decomposition of the hydroxyl-functional poly(alkylene carbonate) polymer, optionally wherein the investment casting composition is formed into the at least one investment casting pattern using additive manufacturing;
b) investing the at least one investment casting pattern with at least one ceramic slurry to form a mold shell; and
c) heating the mold shell to initiate decomposition of the hydroxyl-functional poly(alkylene carbonate) polymer and to form a ceramic mold.

12. The method of claim 11, further comprising heating the ceramic mold to burn out any remaining investment casting pattern from the ceramic mold defining at least one internal void.

13. The method of claim 11 or claim 12, further comprising: disposing a molten metal into the at least one internal void in the ceramic mold; allowing the metal to solidify; and removing the ceramic mold from the solidified metal to obtain a metal object.

14. The method of any of claims 11 to 13, wherein each of the at least one investment casting pattern comprises at least one interior portion that has a lower density than an exterior portion of each of the at least one investment casting pattern.

15. The method of any of claims 11 to 14, wherein the investing the at least one investment casting pattern with the at least one ceramic slurry comprises dipping the at least one investment casting pattern in a first ceramic slurry to form a first layer; spreading sand on the first layer; and drying the first layer.

## Patentansprüche

1. Eine Feingusszusammensetzung, aufweisend:
a) mindestens ein ethylenisch ungesättigtes Monomer;
b) ein hydroxylfunktionelles Poly(alkylencarbonat)-Polymer;
c) einen Radikalinitiator; und
d) einen Katalysator, der eine thermische Zersetzung des hydroxylfunktionellen Poly(alkylencarbonats)-Polymers unterstützt.

2. Die Zusammensetzung nach Anspruch 1, wobei das mindestens eine ethylenisch ungesättigte Monomer ein multifunktionelles Monomer aufweist.

3. Die Zusammensetzung nach Anspruch 1 oder 2, wobei das mindestens eine ethylenisch ungesättigte Monomer eine (Meth)acrylgruppe, eine Styrolgruppe oder eine Vinylethergruppe aufweist.

4. Die Zusammensetzung nach einem der Ansprüche 1 bis 3, wobei das hydroxylfunktionelle Poly(alkylencarbonat)-Polymer ein zahlenmittleres Molekulargewicht von bis zu 50.000 g/mol oder von 700 g/mol bis 2.000 g/mol hat.

5. Die Zusammensetzung nach einem der Ansprüche 1 bis 4, wobei der Katalysator mindestens eines von einem Photosäuregenerator, einem thermischen Säuregenerator oder einer Säure umfasst, wobei der Katalysator optional einen Photosäuregenerator aufweist, aufweisend ein Oniumsalz.

6. Die Zusammensetzung nach einem der Ansprüche 1 bis 4, wobei der thermische Zersetzungskatalysator mindestens eines von einem Photobasengenerator, einem thermischen Basengenerator oder einer Base aufweist.

7. Die Zusammensetzung nach einem der Ansprüche 1 bis 6, wobei das mindestens eine ethylenisch ungesättigte Monomer in einer Menge von 20 Gewichtsprozent (Gew.-%) bis 80 Gew.-%, bezogen auf das Gesamtgewicht der Zusammensetzung, vorhanden ist, und optional wobei das hydroxylfunktionelle Poly(alkylencarbonat)-Polymer in einer Menge von 20 Gew.-% bis 80 Gew.-%, bezogen auf das Gesamtgewicht der Zusammensetzung, vorhanden ist.

8. Die Zusammensetzung nach einem der Ansprüche 1 bis 7, wobei der Katalysator in einer Menge von 0,25 Gew.-% bis 5 Gew.-%, bezogen auf das Gesamtgewicht der Zusammensetzung, vorhanden ist.

9. Die Zusammensetzung nach einem der Ansprüche 1 bis 8, ferner aufweisend einen optischen Aufheller in einer Menge von 0,01 Gew.-% bis 2,0 Gew.-%, bezogen auf das Gesamtgewicht der Zusammensetzung.

10. Die Zusammensetzung nach einem der Ansprüche 1 bis 9, ferner aufweisend mindestens ein Additiv, das aus einem Radikalfänger, einem Sensibilisator, einem Farbstoff, einem Pigment, einem Füllstoff oder einer beliebigen Kombination davon ausgewählt ist.

11. Ein Verfahren, aufweisend:
a) Ausbilden mindestens eines Feingussmusters aus einer Feingusszusammensetzung, die Feingusszusammensetzung aufweisend: 1) mindestens ein ethylenisch ungesättigtes Monomer, 2) ein hydroxylfunktionelles Poly(alkylencarbonat)-Polymer 3) einen Radikalinitiator; und 4) einen Katalysator, der die thermische Zersetzung des hydroxylfunktionellen Poly(alkylencarbonats)-Polymers unterstützt, optional wobei die Feingusszusammensetzung unter Verwendung einer additiven Fertigung in das mindestens eine Feingussmuster ausgebildet wird;
b) Einbetten des mindestens einen Feingussmusters mit mindestens einer Keramikaufschlämmung, um eine Formschale auszubilden; und
c) Erwärmen der Formschale, um die Zersetzung des hydroxylfunktionellen Poly(alkylencarbonats)-Polymers zu initiieren und eine Keramikform auszubilden.

12. Das Verfahren nach Anspruch 11, ferner aufweisend das Erwärmen der Keramikform, um jegliches verbleibendes Feingussmuster aus der Keramikform, die mindestens einen inneren Hohlraum definiert, auszubrennen.

13. Das Verfahren nach Anspruch 11 oder 12, ferner aufweisend: Anordnen eines geschmolzenen Metalls in den mindestens einen inneren Hohlraum in der Keramikform; Ermöglichen, dass das Metall erstarrt; und Entfernen der Keramikform aus dem erstarrten Metall, um ein Metallobjekt zu erhalten.

14. Das Verfahren nach einem der Ansprüche 11 bis 13, wobei jedes des mindestens einen Feingussmusters mindestens einen inneren Abschnitt aufweist, der eine geringere Dichte hat als ein äußerer Abschnitt jedes des mindestens einen Feingussmusters.

15. Das Verfahren nach einem der Ansprüche 11 bis 14, wobei das Einbetten des mindestens einen Feingussmusters mit der mindestens einen Keramikaufschlämmung ein Eintauchen des mindestens einen Feingussmusters in eine erste Keramikaufschlämmung aufweist, um eine erste Schicht auszubilden; Verteilen von Sand auf der ersten Schicht; und Trocknen der ersten Schicht.

## Revendications

1. Composition de coulée de précision comprenant :
a) au moins un monomère à insaturation éthylénique ;
b) un polymère poly(carbonate d'alkylène) à fonction hydroxyle ;
c) un inducteur de radicaux libres ; et
d) un catalyseur qui aide à la décomposition thermique du polymère poly(carbonate d'alkylène) à fonction hydroxyle.

2. Composition selon la revendication 1, dans laquelle l'au moins un monomère à insaturation éthylénique comprend un monomère multifonctionnel.

3. Composition selon la revendication 1 ou la revendication 2, dans laquelle l'au moins un monomère à insaturation éthylénique comprend un groupe (méth)acryle, un groupe styrénique, ou un groupe éther vinylique.

4. Composition selon l'une quelconque des revendications 1 à 3, dans laquelle le polymère poly(carbonate d'alkylène) à fonction hydroxyle a un poids moléculaire moyen en nombre allant jusqu'à 50 000 g/mol ou de 700 g/mol à 2 000 g/mol.

5. Composition selon l'une quelconque des revendications 1 à 4, dans laquelle le catalyseur comprend au moins l'un d'un photogénérateur d'acide, d'un générateur d'acide thermique, ou d'un acide, dans laquelle le catalyseur comprend éventuellement un photogénérateur d'acide comprenant un sel d'onium.

6. Composition selon l'une quelconque des revendications 1 à 4, dans laquelle le catalyseur de décomposition thermique comprend au moins l'un d'un photogénérateur de base, d'un générateur de base thermique, ou d'une base.

7. Composition selon l'une quelconque des revendications 1 à 6, dans laquelle l'au moins un monomère à insaturation éthylénique est présent en une quantité de 20 pour cent en poids (% en poids) à 80 % en poids, en fonction du poids total de la composition, et éventuellement dans laquelle le polymère poly(carbonate d'alkylène) à fonction hydroxyle est présent en une quantité de 20 % en poids à 80 % en poids, en fonction du poids total de la composition.

8. Composition selon l'une quelconque des revendications 1 à 7, dans laquelle le catalyseur est présent en une quantité de 0,25 % en poids à 5 % poids, en fonction du poids total de la composition.

9. Composition selon l'une quelconque des revendications 1 à 8, comprenant en outre un azurant optique en une quantité de 0,01 % en poids à 2,0 % en poids, en fonction du poids total de la composition.

10. Composition selon l'une quelconque des revendications 1 à 9, comprenant en outre au moins un additif choisi parmi un piégeur de radicaux libres, un sensibilisant, un colorant, un pigment, une charge, ou l'une quelconque combinaison de ceux-ci.

11. Procédé comprenant :
a) la formation d'au moins une structure de coulée de précision à partir d'une composition de coulée de précision, la composition de coulée de précision comprenant : 1) au moins un monomère à insaturation éthylénique ; 2) un polymère poly(carbonate d'alkylène) à fonction hydroxyle ; 3) un inducteur de radicaux libres ; et 4) un catalyseur qui aide à la décomposition thermique du polymère poly(carbonate d'alkylène) à fonction hydroxyle, éventuellement dans lequel la composition de coulée de précision est mise sous forme de l'au moins une structure de coulée de précision à l'aide d'une fabrication additive ;
b) le revêtement de l'au moins une structure de coulée de précision avec au moins une suspension épaisse de céramique pour former une coque de moule ; et
c) le chauffage de la coque de moule pour induire la décomposition du polymère poly(carbonate d'alkylène) à fonction hydroxyle et pour former un moule en céramique.

12. Procédé selon la revendication 11, comprenant en outre le chauffage du moule en céramique pour éliminer par calcination toute structure de coulée de précision restante du moule en céramique ce qui définit au moins un espace vide interne.

13. Procédé selon la revendication 11 ou la revendication 12, comprenant en outre : la disposition d'un métal fondu dans l'au moins un espace vide interne dans le moule en céramique ; le fait de laisser le métal se solidifier ; et le retrait du moule en céramique du métal solidifié pour obtenir un objet métallique.

14. Procédé selon l'une quelconque des revendications 11 à 13, dans lequel chacune de l'au moins une structure de coulée de précision comprend au moins une partie intérieure qui a une densité inférieure à une partie extérieure de chacune de l'au moins une structure de coulée de précision.

15. Procédé selon l'une quelconque des revendications 11 à 14, dans lequel le revêtement de l'au moins une structure de coulée de précision avec l'au moins une suspension épaisse de céramique comprend l'immersion de l'au moins une structure de coulée de précision dans une première suspension épaisse de céramique pour former une première couche ; l'étalement de sable sur la première couche ; et le séchage de la première couche.
